# EUROPEAN PATENT SPECIFICATION

(11) **EP 0 882 314 B1**
(45) Date of publication and mention of the grant of the patent: **06.10.1999**
(21) Application number: 97927564.1
(22) Date of filing: 11.06.1997
(51) Int. Cl.: H01R 3/08, H01R 4/66

(54) **SEA ELECTRODE FOR A HIGH VOLTAGE DIRECT CURRENT TRANSMISSION SYSTEM**
SEEWASSER ELEKTRODE FÜR EIN HOHE SPANNUNG GLEICHSTROM-ÜBERTRAGUNGSSYSTEM
ELECTRODE POUR EAU DE MER UTILISEE DANS UN SYSTEME DE TRANSMISSION A COURANT CONTINU A HAUTE TENSION

(30) Priority: 28.10.1996 RU 96121598; 28.10.1996 RU 96121904
(43) Date of publication of application: 09.12.1998
(73) Proprietor: ABB POWER SYSTEMS AB, 771 80 Ludvika (SE)
(72) Inventor: IOSSEL, Yuri, FIN-00241 Helsinki (FI); KAZAROV, Grigory, FIN-02360 Espoo 36 (FI); KOSKI, Veijo, FIN-02200 Espoo 20 (FI); POLIAKOV, Alexey, FIN-00150 Helsinki (FI); GEBHARDT, Heiko, L-8293 Keispelt (LU)
(74) Representative: Dahlstrand, Björn
(86) International application number: SE9701015
(87) International publication number: WO9819362

(56) References cited:
- EP-A- 0 750 365
- WO-A-89/12334
- SE-B- 437 904

## Description

### TECHNICAL FIELD

The invention relates to a sea electrode for grounding of a high voltage direct current (HVDC) transmission system.

### BACKGROUND ART, DISCUSSION OF THE PROBLEM

Ground electrodes means in this context devices used to couple an electrode line of a power network comprising an HVDC transmission system, via one or more feeder cables, to an electrically conductive medium such as soil or sea water.

HVDC transmission systems usually have DC voltages above 5 kV and a transmitted power above 10 MW.

As compared with alternating current (AC) transmission systems, HVDC transmission systems require only two conductors. At least one of those conductors is realized as an overhead line or a high voltage cable. For bipolar transmission another conductor of the same kind is used under normal operating conditions, but in monopolar transmission, the ground, that is soil and/or sea water, is used as return conductor for the transmitted DC-current. However, ground electrodes are required also in HVDC transmission systems intended for bipolar transmission, to transfer unbalance currents and, under operation in monopolar mode, the whole DC current transmitted by the HVDC system.

Depending on the location of the HVDC-system, the ground electrodes can be embedded in soil or in sea water and/or sea water impregnated matter at the sea bottom. Ground electrodes embedded in sea water and /or sea water impregnated matter usually have certain advantages as compared to ground electrodes embedded in soil, such as a better personal safety because they are usually not easily accessible to human beings, and their environment offers a good cooling system and a surrounding electrically conductive medium which has a much higher specific electric conductivity than soil located far from the sea.

For a general description of ground electrodes in connection with HVDC systems, reference is made to for example E. Uhlmann: Power Transmission by Direct Current, Springer Verlag 1975, in particular pages 255 - 273.

This application is concerned with sea electrodes, that is electrodes embedded in an electrically conductive medium such as sea water and/or sea water impregnated matter at the sea bottom, for example gravel, sand, clay and mud.

Sea water is in this context to be regarded as a good conductive homogeneous medium. The specific electric conductivity of the sea bottom is lower than that of the sea water but usually, and in particular in layers close to the water, higher than for soil layers far away from the sea.

The sea electrodes are - apart from the requirements as to current rating and resistance - also required to be electrically safe, to have high operational reliability and sufficiently long service life and, in addition, they shall not cause any harmful environmental effects.

The grounding resistance has to be low, usually well below one ohm. The electric field strength in the sea water in the vicinity of the electrode shall be less than a desired level, often specified as 1 V/m, not to cause any harmful influence on the environment and affect fish and possibly also other aqueous organisms in the vicinity of the electrode.

A conventional sea electrode comprises an electrically conductive electrode body which is embedded in the conductive medium. At least a part of the surface of the electrode body, herein called the active part of the electrode body, is in electric contact with the medium. The electrode body is coupled to the HVDC system via one or more feeder cables which transfer the DC current between the medium and an electrode line in the HVDC system.

Such a sea electrode usually also comprises interconnection cables for internal connection of parts of the electrode body as described below, and additional parts performing purely mechanical functions, such as for instance electrode holders, supports and mechanical protection parts.

Usually, sea ground electrodes are protected and kept in place by a ballast, either in the form of a separate solid cover or by a layer of gravel.

In order to reach a sufficiently low grounding resistance and also to increase the reliability of the electrode, a sea ground electrode usually comprises a large number of sub-electrodes, each sub-electrode being fed from a separate feeder cable, and comprising at least one electrode element. The surface of each electrode element comprises an active part, in the following called the active part of the electrode element, which is in electric contact with the medium. In cases where the sub-electrode comprises more than one electrode element, these elements are connected to each other by interconnection cables. The sub-electrodes are usually arranged in sections. Each such sub-electrode usually also comprises additional elements such as electrode element holders.

Typically, the electrode elements are manufactured in the form of rods, tubular elements, plates or meshes, which makes them easy to manufacture and to mount. The plates or meshes usually have an elongated shape such as a strip.

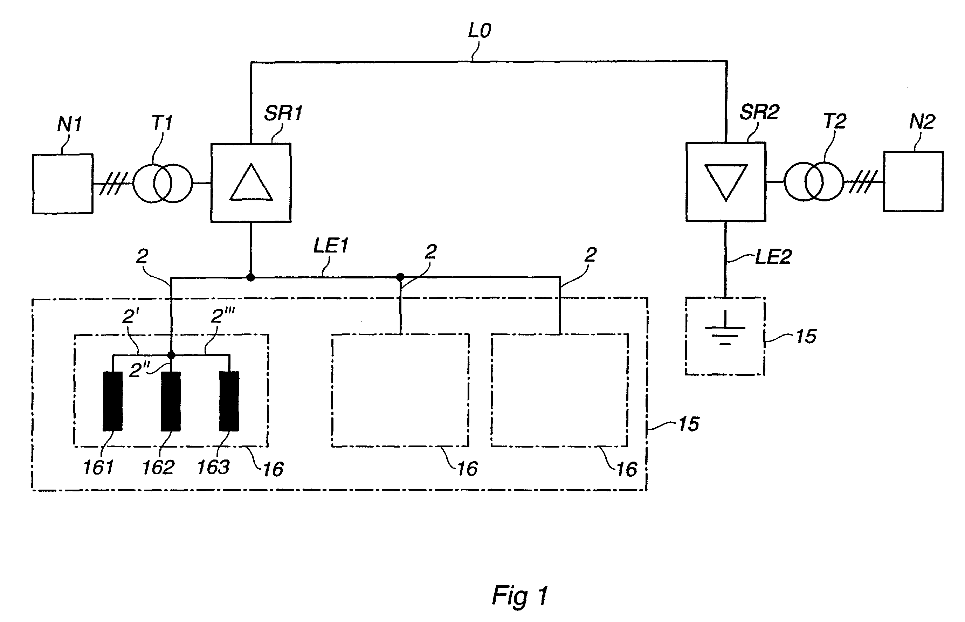

Figure 1 illustrates an electrical configuration typical for an HVDC transmission system with sea ground electrodes at both ends. An electric alternating current (AC) power network N1 is via a transformer T1 connected to the AC-side of a thyristor converter SR1 and an AC power network N2 is via a transformer T2 connected to the AC-side of a thyristor converter SR2. On the DC-sides of the converters, a cable LO connects one of their respective poles. The ground return comprises two electrode lines LE1, LE2, two sea electrodes 15, which are of similar structure, and the sea water and the sea bottom (not shown) between the sea electrodes. The sea electrode at the converter SR1 comprises a plurality of sub-electrodes 16, each of which being connected to the electrode line via a main feeder cable 2. Each sub-electrode comprises a plurality of electrode elements 161, 162, 163, interconnected by interconnection cables 2', 2", 2"' respectively. and mechanical support members (not shown). The electrode body comprises all the electrode elements 161, 162, 163 comprised in all the sub-electrodes connected to the electrode line.

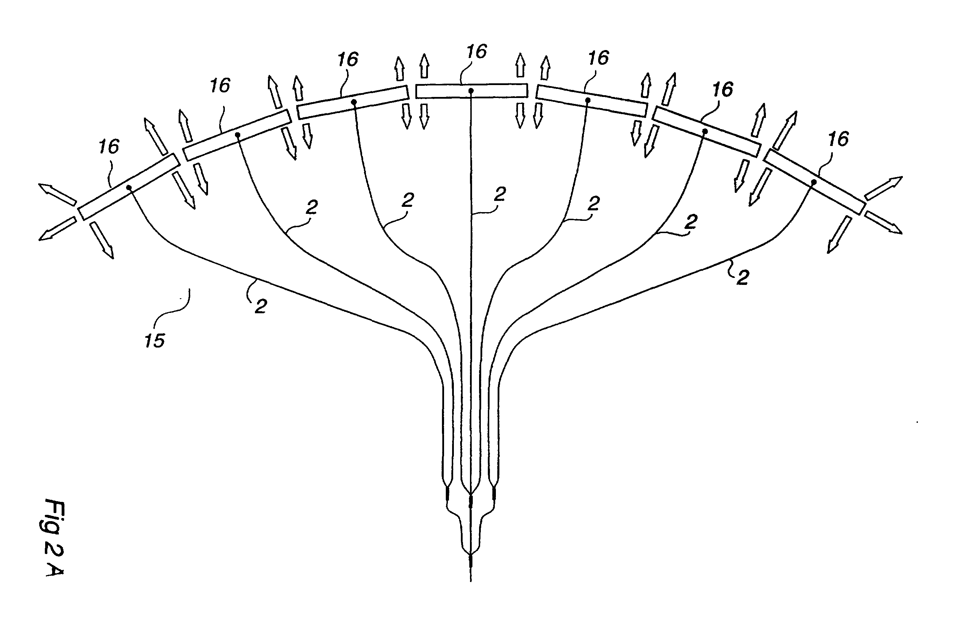

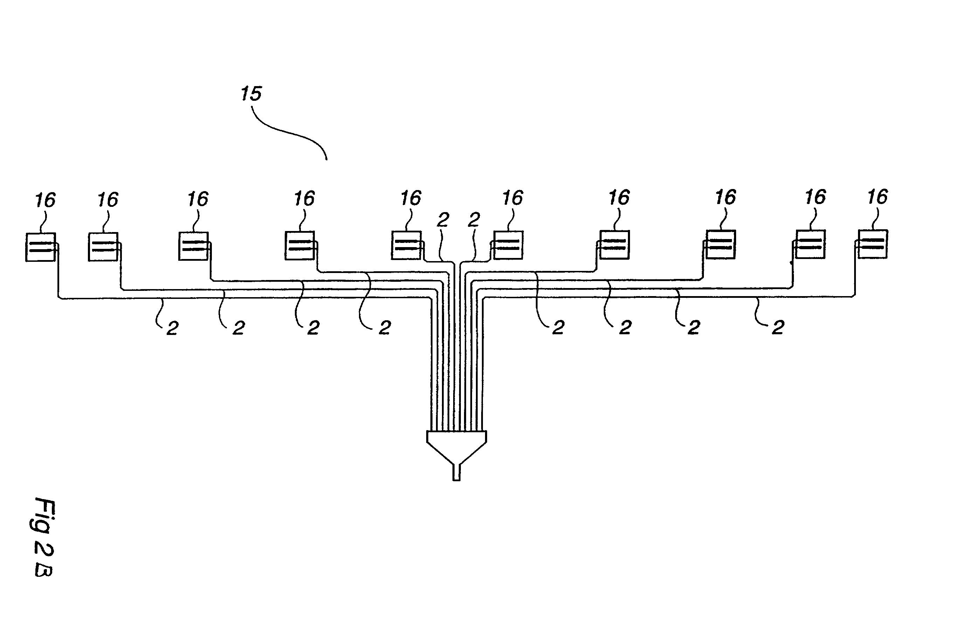

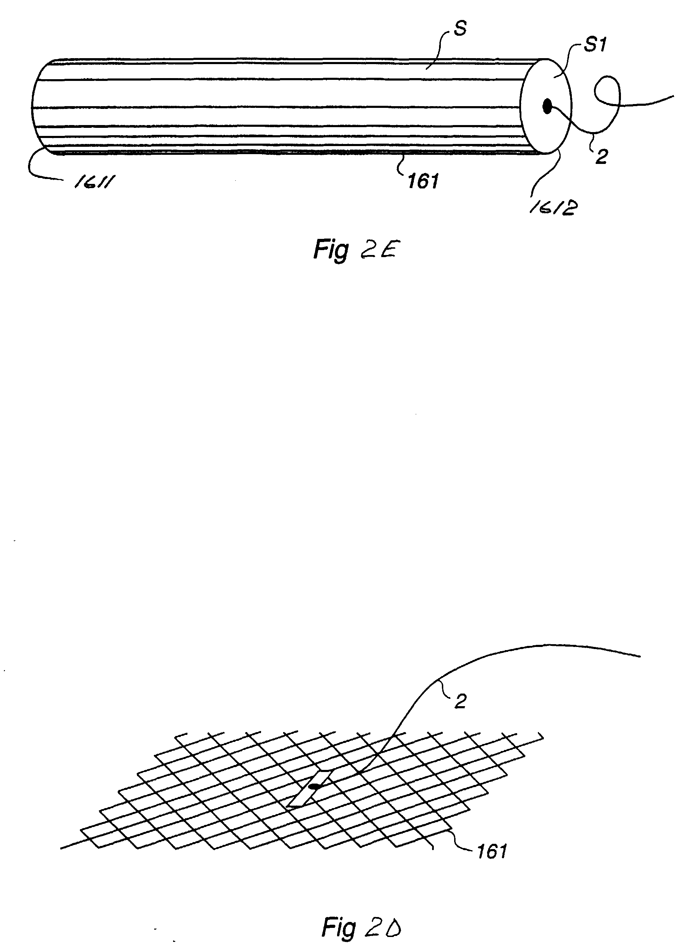

Figure 2A shows an example of the physical layout, seen from above, of a prior art electrode for use as an anode, that is delivering current to the sea water. The sub-electrodes 16, each of which is fed by a separate feeder cable 2, are arranged in an array along a curved line, and are mutually separated from each other with substantially equal distances. However, the arrangement of sub-electrodes along a line as illustrated in figure 2A, can also be realized with the sub-electrodes separated from each other with unequal distances.

Figure 2B shows another example of the physical layout, seen from above, of a prior art electrode. The sub-electrodes 16, each of which are fed by a separate feeder cable 2, are arranged in an array along a substantially straight line, and are mutually separated from each other with unequal distances, in such a way that the outermost located sub-electrodes are located at a somewhat shorter distance from their neighboring sub-electrodes than are the sub-electrodes located in the center of the electrode.

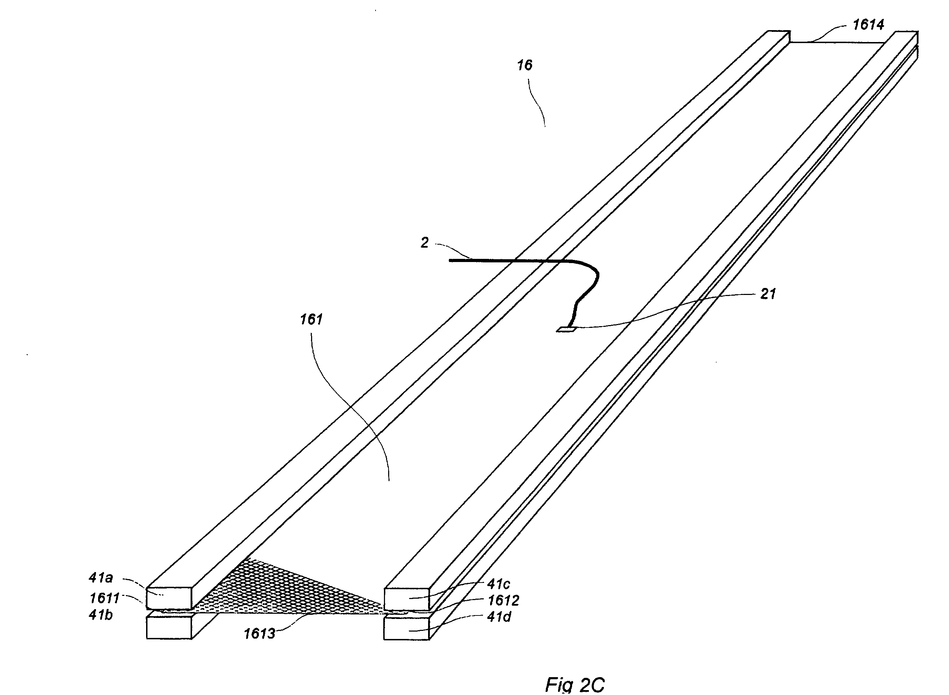

Figure 2C shows a known embodiment of a sub-electrode 16, having an electrode element 161, realized as a substantially flat, elongated strip with a first and a second border 1611, 1612 respectively, and end edges 1613 and 1614. The strip is made of a mesh of a metal with a low dissolution rate, for instance coated titanium. The strip is supported at its borders by concrete slabs 41a-41d. Here, the active part of the electrode element coincides with the whole surface of the electrode element.

The sub-electrode is coupled to a feeder cable 2 at a feeding point 21, but might also be provided with interconnection cables, coupling the feeder cable to a plurality of feeding points distributed along the strip. The electrode element may also be in the form of a substantially flat plate instead of a mesh

Figure 2D shows in detail a part of the electrode element according to figure 2C, the same reference numbers indicating the same parts in the two figures.

Figure 2E shows an electrode element 161 of cylindrical shape, with the feeder cable 2 coupled to a cross-section surface S1 at one of the ends of the electrode element. Here, the envelope surface S of the electrode element constitutes the active part of the electrode element, while the two cross-section surfaces S1, S2 (of which only S1 is shown) of it usually are covered by a non-conducting material and thus are not an active part of the electrode element. The active part of the electrode element is delimited by a first border 1611 and a second border 1612, each of which being circular lines and in this case coinciding with the circumferences of the cross-section surfaces S2 and S1, respectively. In this application, electrode elements said to have a cylindrical shape also include electrode elements similar to the one illustrated in figure 2E, but having a tubular form.

Sea electrodes in cathodic operation, that is where the current flows from the sea water into the electrode body, usually have an electrode body executed in the form of loops of wires or bars of copper.

Usually, it is more difficult to provide such electrodes with mechanical protection than it is with the electrodes intended for anodic operation, as described above, and typically they will also exhibit high current densities and consequently, high electric field strengths in the sea water in the vicinity of the electrode.

Known sea electrodes for HVDC transmission systems, transferring comparatively high currents, operate with a low average current density, and therefore often cover large areas at the sea bottom. However, an inhomogeneous current distribution with high local current densities on the surface of the electrode body, in particular at peripheral parts of the electrode and at feeding points of the electrode elements, results in high local electric field strength in the sea water.

One disadvantage with the known sea electrodes is that they typically have a high local electric field strength, usually at the peripheral parts of their surface and at the locations where the feeder cables are connected. As already mentioned, the electric field strength may have a harmful effect on fish and possibly also other aqueous organisms in the vicinity of the electrode.

Another disadvantage with the known sea electrodes is that they usually are designed to operate with a low average current density on the surface of the electrode body in order to keep the maximum electric field strength at a desired value. At least some materials, which can be used as anodes as well as cathodes, thus in contrary to the above-mentioned coated titanium, usable only in anodic operation, and copper, usable only in cathodic operation, typically allow for at least a hundred times higher current density. One consequence is that the electrodes are poorly utilized and another is that they often occupy large areas, and thus may influence local conditions in the sea, such as for instance water streams.

Still another disadvantage with the known sea electrodes is that chlorine and other products of electro-chemical reactions between the material of the electrode body and the sea water will be generated in particular at locations with high current densities.

### SUMMARY OF THE INVENTION

The object of the invention is to provide a sea electrode of the kind stated in the introduction, which is improved with respect to the above-mentioned disadvantages associated with the prior art, in particular by reducing high local electric field strength in the sea water in the vicinity of the electrode and by improving the utilization of it with respect to average current density.

A sea electrode according to the invention comprises at least one electrically conductive electrode element to be embedded in the conductive medium and to be coupled to the transmission system via a feeder cable, to transfer between the medium and the transmission system a feeder cable current flowing in the feeder cable. The surface of the electrode element has an active part which is in electric contact with the medium when the electrode element is embedded in it.

According to one embodiment of the invention, wherein the electrode element has a substantially flat shape and at least a first border, which delimits the active part of the surface of the electrode element, the electrode element is provided with at least one elongated current feeder for coupling to the feeder cable, and with electrically non-conductive means for insulating the current feeder from the medium, when the electrode element is embedded in it, which current feeder is along its length coupled to the at least first border, thereby to homogenize the current distribution at the active part.

According to another embodiment of the invention, wherein the electrode element has a first and a second border between is formed an active part of the surface of the electrode element, the electrode element is provided with two electrically non-conductive side barriers, located one at each of the first and second borders, said side barriers having a substantial extension outwards from the active part of the electrode element so as to have a substantial extension into the medium when the electrode element is embedded in it, thereby to homogenize the current distribution at the active part along a direction between the first and second borders.

According to another embodiment of the invention, wherein the electrode element has at least a first border, which delimits an active part of the surface of the electrode element, the electrode element is provided with at least a first smoothing screen.having an electrically non-conductive surface, the projection of said screen on the surface of the active part of the electrode element, in a direction perpendicular to the surface of that active part, covering at least a first zone of the surface of that active part, which zone is adjacent to the first border, and with a first electrically non-conductive guiding means at the at least first border for diverting current emanating from the vicinity of said border towards that part of the conductive medium which is located between said first zone and said first smoothing screen, so as to homogenize the current distribution in the vicinity of the active part, as seen from that side of said first smoothing screen that is opposite to the surface of the active part of the electrode element.

According to another embodiment of the invention, wherein the electrode element has a first and a second border between is formed an active part of the surface of the electrode element, and wherein the electrode element has the shape of a strip, the active part of the electrode element forms a closed ring shape configuration wherein the first and second borders form closed curves.

Further developments and improvements of the invention will become clear from the following description and claims.

### BRIEF DESCRIPTION OF THE DRAWINGS

- Figure 1: shows a typical electrical configuration for an HVDC transmission system,
- figures 2A-2B: show examples of a prior art sea electrode for a HVDC transmission system,
- figure 2C: shows a prior art sub-electrode of mesh-type, comprised for example in a sea electrode according to figure 2A,
- figure 2D: shows a part of an electrode element according to figure 2C,
- figure 2E: shows a prior art electrode element of cylindrical shape,
- figures 3A: shows an electrode element according to figure 2C, with four feeding points,
- figures 3B-3C: show current density at sections of an electrode element according to figure 3A,
- figure 4A: shows a sub-electrode according to a first embodiment of the invention,
- figures 4B-4C: show current density at sections of a sub-electrode according to figure 4A,
- figure 5A: shows a sub-electrode according to a second embodiment of the invention,
- figure 5B: shows current density at a section of a sub- electrode according to figure 5A,
- figure 5C: shows an end-view of a sub-electrode similar to figure 5A,
- figure 5D: shows a section through a part of a sub-electrode similar to figure 5A,
- figure 6A: shows a sub-electrode according to a third embodiment of the invention,
- figure 6B: shows an end-view of a sub-electrode according to figure 6A,
- figure 6C: illustrates the homogenizing effect of side barriers according to figure 6A on the current density distribution,
- figures 6D-6F: show current density at sections of a sub-electrode according to figure 6A,
- figure 7A: shows a sub-electrode according to a fifth embodiment of the invention,
- figure 7B: shows an end-view of a sub-electrode according to figure 7A,
- figure 7C: shows details of a smoothing screen according to figure 7A,
- figure 7D: shows some geometrical relations at a cross-section of a sub-electrode according to figure 7A,
- figure 7E: shows current density at a section of a sub- electrode according to figure 7A,
- figure 8A: shows a sub-electrode according to a sixth embodiment of the invention,
- figure 8B: shows an equivalent specific surface resistivity distribution of a smoothing screen according to figure 8A,
- figure 8C: shows current density at a section of a sub-electrode according to figure 8A,
- figure 9A: shows a sub-electrode according to a seventh embodiment of the invention,
- figures 9B-9C: show current density at sections of a sub-electrode according to figure 9A,
- figure 10A: shows a sub-electrode according to a eight embodiment of the invention,
- figure 10B: shows an electrode element with four concentrated feeding points, each provided with a smoothing screen according to the eight embodiment of the invention,
- figure 10C: shows current density at a section of an electrode element according to figure 10B,
- figures 11A-11B: show details of an electrode element with feeding points and smoothing screens according to figure 10A,
- figure 12: shows a sub-electrode with the electrode element embedded in a backfill according to an advantageous development of the invention,
- figure 13A: shows a sub-electrode according to a ninth embodiment of the invention,
- figure 13B: shows a cylindrical electrode element according to a tenth embodiment of the invention,
- figure 13C: shows an alternative to the tenth embodiment of the invention, and
- figure 14: shows an advantageous development of the embodiment of the invention according to figure 13B.

### DESCRIPTION OF PREFERRED EMBODIMENTS

It is to be understood that all figures are schematic. They show only principal characteristic features of the invention but not necessarily all construction details such as fastening means, covers for mechanical protection etc.

The following general observations apply to sea electrodes of the kind this application is concerned with.

The specific electric conductivity of the sea water and of the sea bottom are usually several orders of magnitude below the specific electric conductivity of the material of the electrode body.

It should be noted that the equivalent specific electric conductivity of a gravel layer above the electrode, although lower than the electric conductivity of the sea water, is high enough to allow for currents to penetrate the layer and reach the sea water. This is the case also for a massive ballast made of concrete, which becomes electrically conductive after being immersed into sea water for some time.

The current density and the electric field strength in the sea water and at the sea bottom surrounding the electrode body are proportional to each other. Thus, also the electric field strength distribution will depend on the current distribution between the sub-electrodes and within each of them, so that zones with a high current density also are zones with a high local electric field strength.

The current distribution on the electrode body depends on the current distribution between the sub-electrodes as well as on the current distribution within each sub-electrode.

The current distribution between the sub-electrodes depends mainly on their relative location to each other and on the distances between them and usually the currents are highest at the outermost located sub-electrode of the electrode.

The current distribution within the sub-electrode mainly depends on the shape of the electrode elements and on the locations of their feeding points.

For known sea electrodes, the highest current densities will occur at the peripheral parts of the outermost sub-electrodes of an electrode, illustrated in figure 2A with arrows indicating the direction and magnitude of the current along the electrode, and at the location of the feeding points (not shown in the figure).

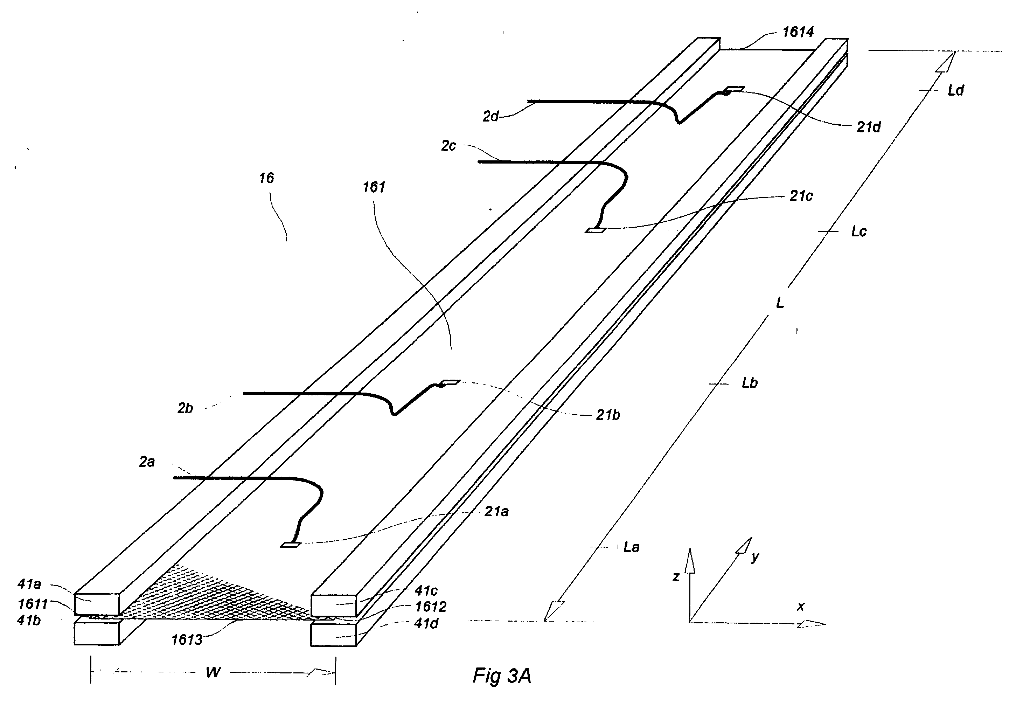

Figure 3A shows in a perspective view an electrode element 161 of the same kind as described in connection with figure 2C, however with four feeding points 21a, 21b, 21c, 21d, each of which being coupled to a cable 2a, 2b, 2c and 2d respectively.

To explain various features associated with the electrode element, a coordinate system x-y-z is used with its origin of coordinates at the lower left-hand corner of the active part of the electrode element and with a positive y-axis along the first border 1611 and a positive x-axis along the electrode element perpendicular to the y-axis. A z-axis is defined, perpendicular to the x-axis and to the y-axis according to the right-hand rule. With the electrode embedded in the conductive medium, the positive z-axis will usually be directed from the sea bottom upwards.

The active part of the electrode element, which in the embodiment shown in figure 3A coincides with surface of electrode element, has a length L and a width W and the feeding points have an x-coordinate W/2 and y-coordinates La, Lb, Lc and Ld respectively. The first border of the active part of the electrode element has the x-coordinate x = 0, and the second border the x-coordinate x =W. The end edges 1613 and 1614 of the electrode element have the y-coordinates y = 0 and y = L respectively.

An x-y-z-coordinate system as described above will in the following be used in connection with all embodiments of the invention where the electrode element has the shape of a strip.

The electrode element is embedded in a conductive medium, such as for example sea water (not shown), with a specific electric conductivity several orders of magnitude below the specific electric conductivity of the material of the electrode element, and assumed to transfer a current to the medium, that is to operate as an anode.

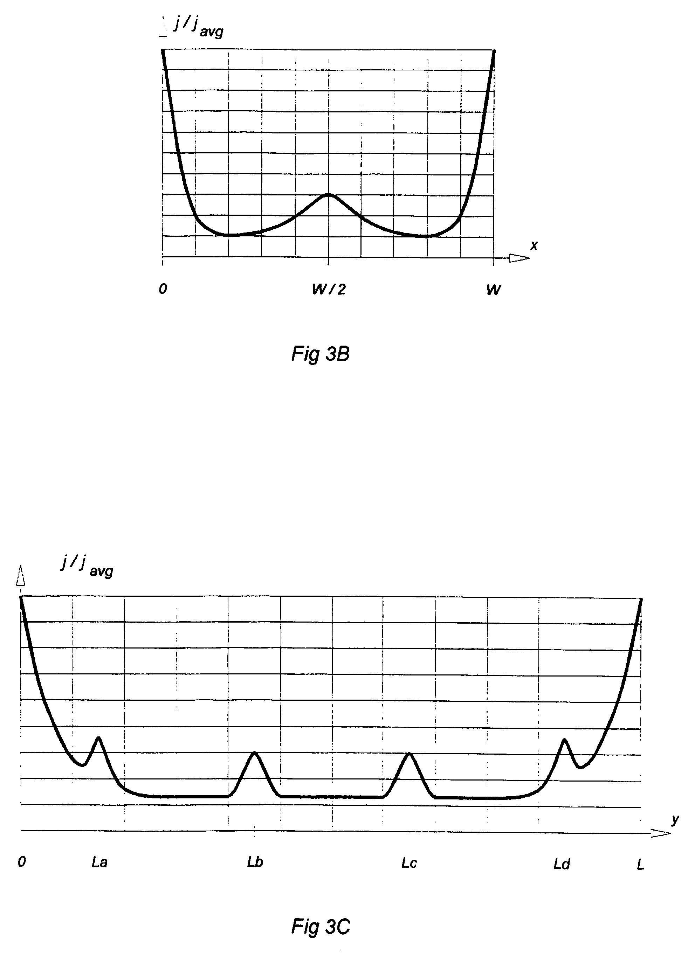

Figure 3B shows on the vertical axis the normalized local current density J/Javg at the surface of the electrode element, at a section through it with the y-coordinate Lb, where J is the actual current density along the section in the x-direction, and Javg is the average value of the current density at the section. The horizontal axis shows the x-coordinate at the section.

In the following figures illustrating normalized local current densities, a similar explanation to those figures will apply. Where the figures show the normalized local current densities at a section through the electrode element with a selected x-coordinate, a corresponding explanation will apply, J then being the actual current density along the section in the y-direction, and the horizontal axis showing the y-coordinate at the section.

With respect to the current density distribution at the surface of the electrode element, the wording 'current distribution' will be used as a shorthand for the wording 'current density distribution'.

Figure 3B shows that the normalized current density increases rapidly in the neighborhood of the coordinates x = 0 and x = W, that is the x-coordinates of the borders, and has a local maximum for x = W/2, that is the x-coordinate of the feeding point.

Figure 3C shows the normalized local current density at a section with the x-coordinate x = W/2. Figure 3C shows that the normalized current density increases rapidly in the neighborhood of the coordinates y = 0 and y = L, that is the y-coordinates of the end edges of the electrode element, and has local maxima for y = La, y = Lb, y = Lc and y = Ld, that is the y-coordinates of the feeding points.

The maxima for x = 0, x = W, y = 0 and y = L, are due to the geometrical configuration of the active part of the electrode element, whereas the local maxima depend on the manner in which the current is fed into it. Thus, for example, by feeding the current to the electrode element via a number of conductive feeding ribbons of the length W, located at the y-coordinates y = La, y = Lb, y = Lc and y = Ld, the local maximum shown in figure 3B at x = W/2 will disappear. The rapid increase of the local current density in the neighborhood of the coordinates x = 0 and at x = W will, however, remain.

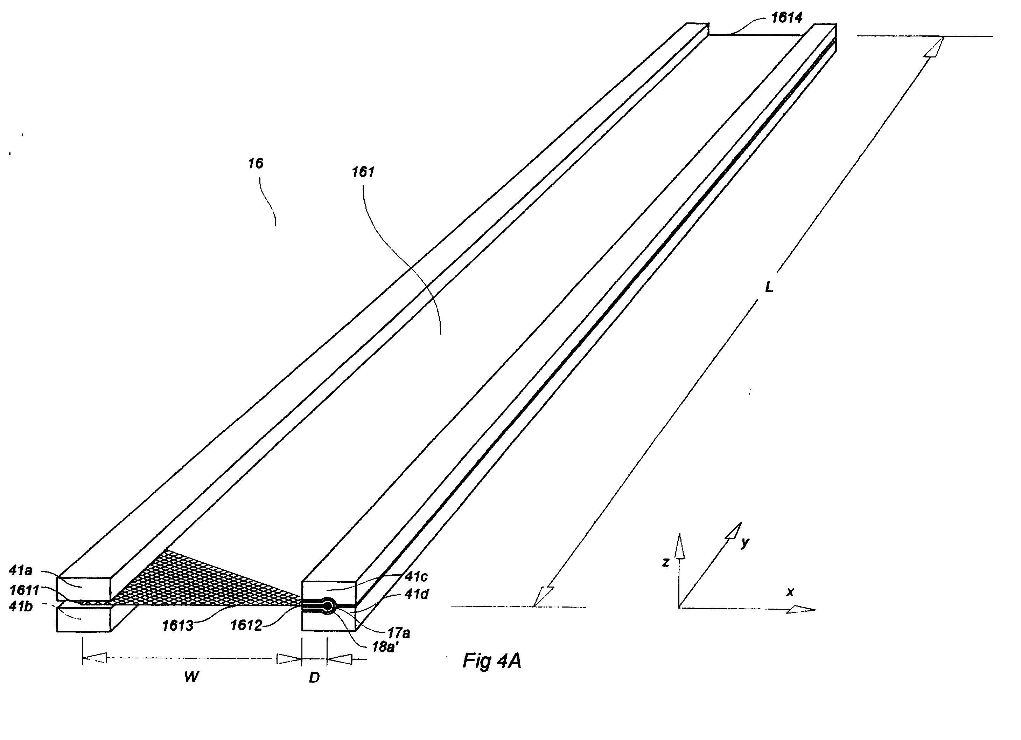

A first embodiment of the invention is illustrated in figure 4A. The figure shows in a perspective view an electrode element 161 of similar kind as described in connection with figure 3A. but with the difference that the concentrated feeding points at the electrode element, that is in figure 3A the feeding points 21a, 21b, 21c, 21d, are, according to the invention, replaced by an in the y-direction elongated electrically conductive first current feeder 17a. A part of the electrode element extends in between the concrete slabs 41c and 41d and a layer 18a' of an electrically non-conductive material surrounds the current feeder and the part of the electrode element which is located in between the concrete slabs 41c and 41d, so as to insulate the current feeder and the mentioned part of the electrode element from the conductive medium. In this case, the second border 1612 of the active part of the electrode element is located at the edge of the concrete slabs 41c and 41d facing the concrete slabs 41a and 41b. The active part of the electrode element is in the x-direction delimited by the coordinates x = 0 and x = W. The first current feeder runs along the second border 1612 in between the concrete slabs 41c, 41d and the x-coordinate of the first current feeder is x = W + D, where D is the distance in the x-direction between the second border and the first current feeder. The first current feeder is, along its total length in the y-direction, via the part of the electrode element that extends in between the concrete slabs 41c and 41d, in electric contact with the second border and is coupled to a not shown feeder cable.

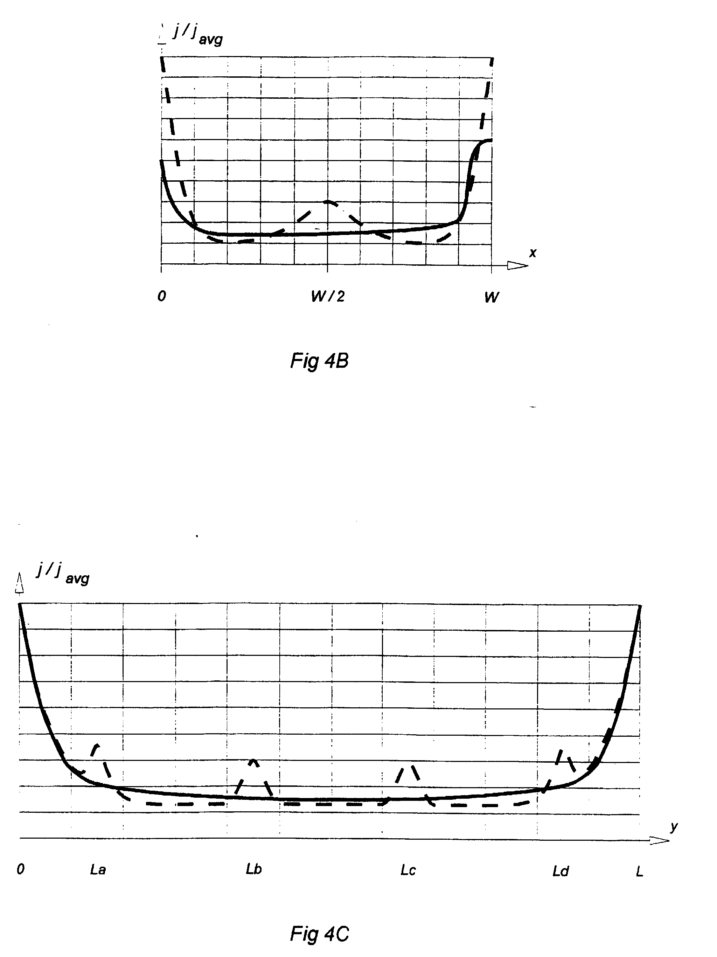

Figure 4B shows the normalized local current density at a section with the y-coordinate Ly. The normalized current density for an embodiment as described in connection with figure 4A is shown in plain line and for comparison, the corresponding normalized current density as illustrated in figure 3B is in figure 4B shown in dashed line. Figure 4B shows that for this first embodiment of the invention, the normalized local current density is, in the neighborhood of the coordinates x = 0 and x = W, that is the x-coordinates of the borders, lower than for the known sub-electrode element according to figure 3B, and that the local maximum at x = W/2 does not appear. The figure also illustrates that, due to the unsymmetrical feeding of the current to the electrode element, the current density at the second border, where the current is fed into the active part of the electrode element, is higher than at the first border.

Figure 4C shows the normalized local current density at a section with the x-coordinate x = W/2. Figure 4C shows that the normalized current density increases rapidly in the neighborhood of the coordinates y = 0 and y = L, that is the y-coordinates of the end edges of the electrode element, which is due to the geometrical configuration of the active part of the electrode element. The local maxima at y = La, y = Lb, y = Lc and y = Ld as illustrated in figure 3C and in figure 4C for comparison showed in dashed line, do not appear in this first embodiment of the invention.

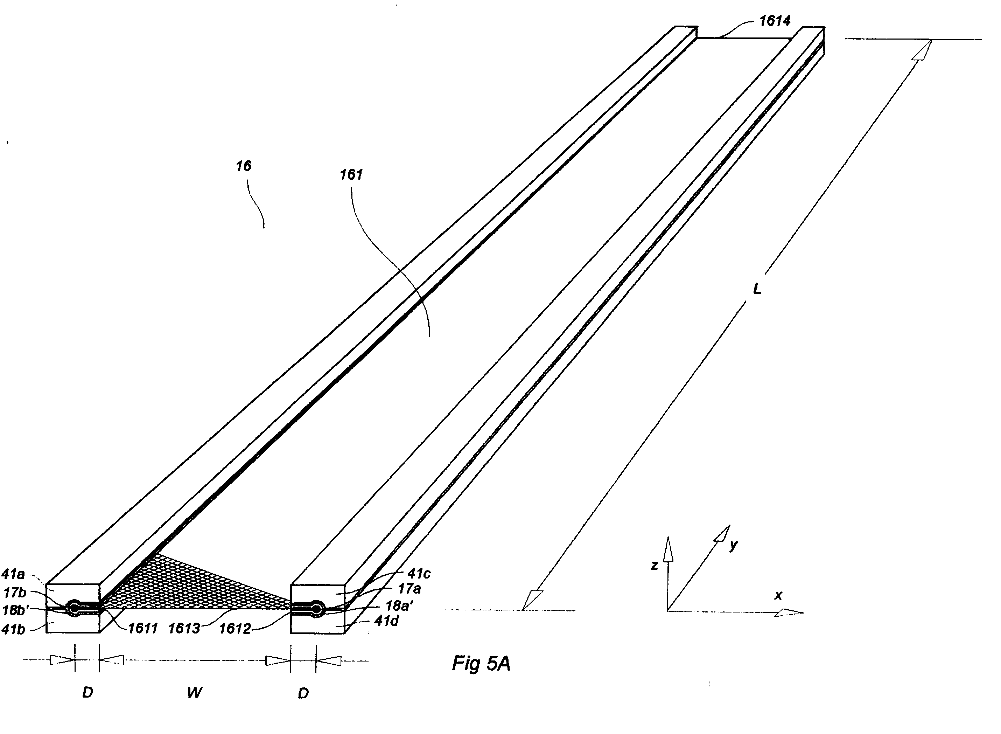

Figure 5A shows in a perspective view a second embodiment of the invention, differing from the first one in that a second current feeder 17b, of the same kind as the first current feeder 17a, is located in between the concrete slabs 41a and 41b. A part of the electrode element extends in between the concrete slabs 41a and 41b and a layer 18b' of an electrically non-conductive material surrounds the second current feeder and the part of the electrode element which is located in between the concrete slabs 41a and 41b, so as to insulate the second current feeder and the mentioned part of the electrode element from the conductive medium. In this case, the first border 1611 of the active part of the electrode element is located at the edge of the concrete slabs 41a and 41b facing the concrete slabs 41c and 41d. The active part of the electrode element is in the x-direction delimited by the coordinates x = 0 and x = W. The second current feeder runs along the first border 1611 in between the concrete slabs 41a, 41b and the x-coordinate of the current feeder is x = - D, where D is the distance in the x-direction between the first border and the second current feeder. The second current feeder is, along its total length in the y-direction, via the part of the electrode element that extends in between the concrete slabs 41a and 41b, in electric contact with the first border and is coupled to a not shown feeder cable.

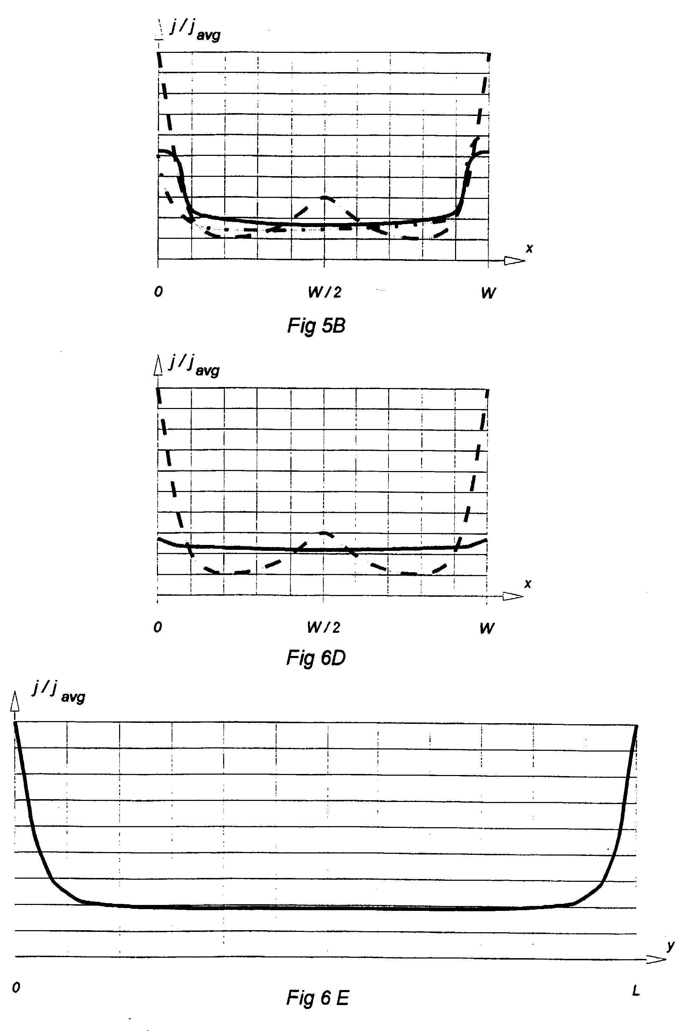

Figure 5B shows the normalized local current density at a section with the y-coordinate Ly. The normalized current density for the embodiment as described in connection with figure 5A is shown in plain line. For comparison, figure 5B also shows, in dashed line, the corresponding normalized current density as illustrated in figure 3B and, in point-dashed line, the corresponding normalized current density as illustrated in figure 4B. Figure 5B shows that for this second embodiment of the invention the normalized local current density is, in the neighborhood of the coordinates x = 0 and x = W, that is the x-coordinates of the borders, lower than for the embodiments according to figures 3A and 4A. The figure also illustrates that, due to the symmetrical feeding of the current to the electrode element, the current densities at the first and the second borders are equal.

The normalized local current density at a section with the x-coordinate x = W/2, will in an embodiment according to figure 5A have a similar distribution as shown in figure 4C.

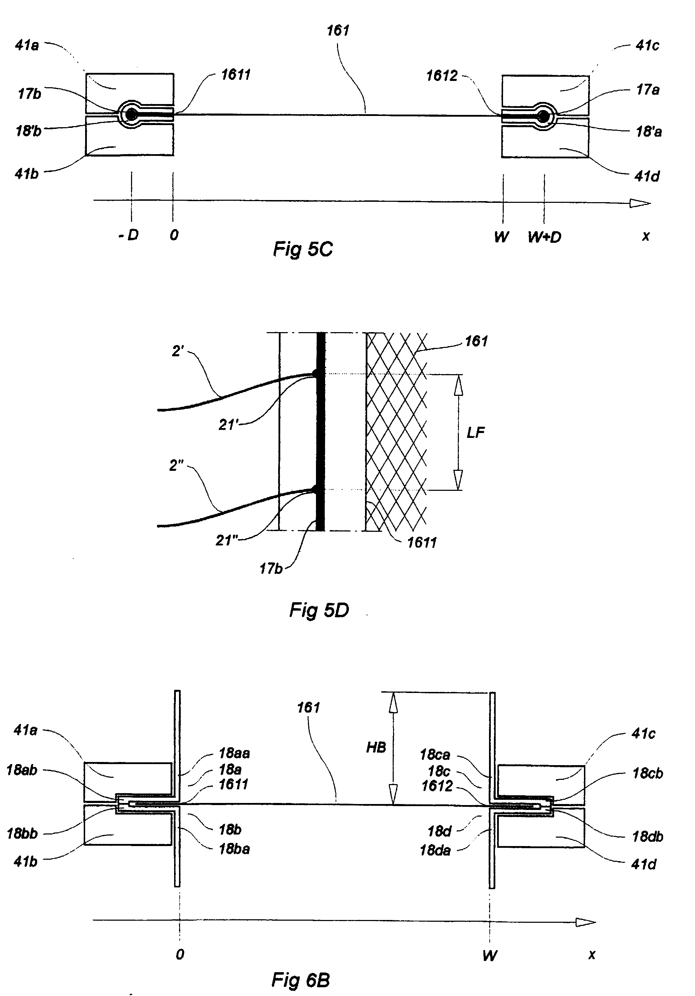

Figure 5C shows an end view of a sub-electrode similar to the one illustrated in figure 5A. The right hand part of figure 5C is also representative for the sub-electrode illustrated in figure 4A.

The effect of the current feeders on the current distribution is thus to homogenize the current distribution at the active part of the electrode element along the direction of the x-axis between the first and second borders.

Figure 5D shows a section through a part of the sub-electrode according to figure 5C, in the plane of the electrode element and through the second current feeder 17b. Two cables 2', 2" respectively are coupled to the current feeder, one at each of two feeding points 21', 21" respectively. The distance between the feeding points in the y-direction is labeled LF. Due to the insulating effect of the non-conductive layer 18b', the actual current inflow to the active part of the electrode element can be controlled, in the purpose to homogenize the current distribution at the electrode element, by choosing suitable values of the distances LF and D and of the current distribution between the cables 2' and 2". Also, the parts of the electrode element which are insulated from the surrounding medium can be manufactured by a cheaper material than the active part of the electrode element.

Feeding ribbons, as mentioned in connection with figure 3C, are usually connected to the mesh electrode element by spot welding. To avoid high current densities at those spots of contact, it is preferable to design the feeding ribbon with a width which is at least equal to the greatest cross dimension of a mesh aperture.

The current inflow from a feeding ribbon to the electrode element can be controlled in a manner similar to the one described in connection with figures 5C and 5D. The feeding ribbon is then designed with a selected height in the direction perpendicular to the plane of the electrode element (corresponding to the dimension D of figure 5C) and with a surrounding layer of an electrically non-conductive material, so as to insulate the feeding ribbon from the conductive medium. By connecting the cables to the feeding ribbon at that of its edges that is opposite to the edge which is in contact with the electrode element, the current inflow to the electrode element can be controlled to achieve a desired current distribution along the feeding ribbon, as described in connection with figure 5D.

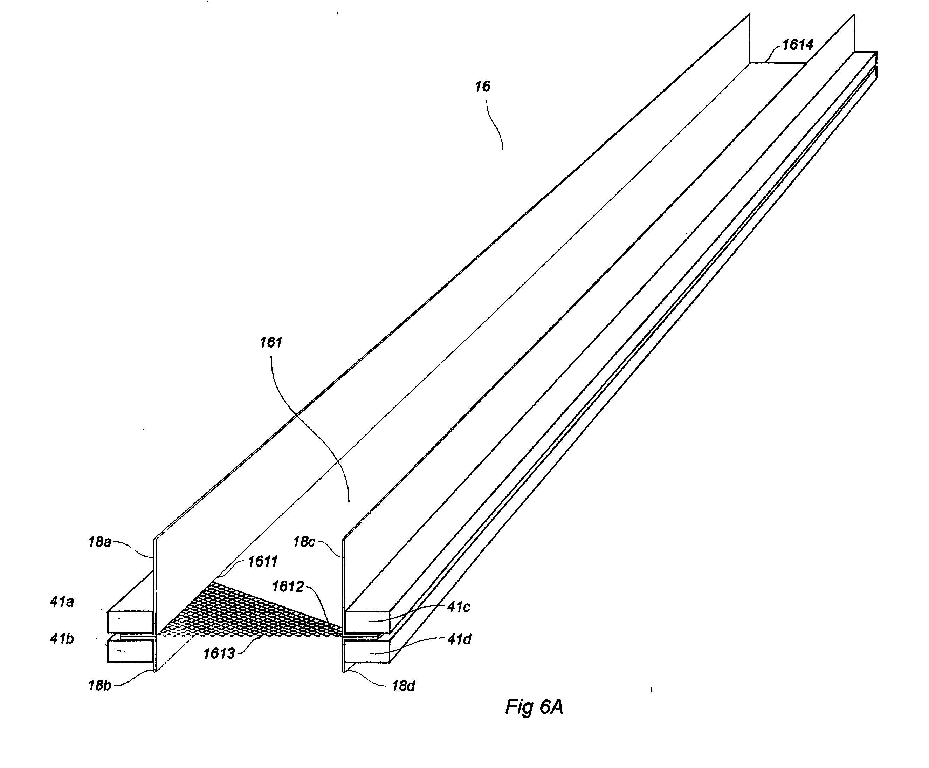

A third embodiment of the invention is illustrated in figure 6A. The figure shows in a perspective view an electrode element 161 of the same kind as described in connection with figure 3A, (the feeding points are not shown). According to the invention, the sub-electrode is provided with two side barriers manufactured from an electrically non-conductive material. The barriers are in this embodiment formed by four beams 18a, 18b, 18c, 18d, each having an L-profile and running along the electrode element in the y-direction.

As is shown more in detail in figure 6B, the beams are located between the concrete slabs in such a way that one leg 18ab of the L-profile of the beam 18a and one leg 18bb of the L-profile of the beam 18b are located between the slabs 41a and 41b and one leg 18cb of the L-profile of the beam 18c and one leg 18db of the L-profile of the beam 18d are located between the slabs 41c and 41d. The other legs 18aa, 18ba, 18ca and 18da of the L-profiles are thereby arranged so that the legs 18aa and 18ba together form one side barrier and the legs 18ca and 18da together form another side barrier, facing the first mentioned side barrier. Parts of the electrode element are extending in between the legs 18ab and 18bb and in between the legs 18cb and 18db, respectively, and the legs 18ab, 18bb, 18cb and 18db are formed so that those extending parts become electrically insulated from the conductive medium. The active part of the electrode element is located between the two barriers so that its first border 1611 is located at the edge of the beams 18a, 18b, facing the beams 18c, 18d, and its second border 1612 at the edge of the beams 18c, 18d, facing the beams 18a, 18b. The height of each beam in a direction perpendicular to the plane of the electrode element, that is in the z-direction, is labeled HB and the distance between the two side barriers is W.

The beams are kept in place by the weight of the concrete slabs, or alternatively, the concrete slabs may be fixed to each other by a clamping device (not shown).

It is known that at a boundary surface between an electrically conductive first medium such as sea water, and a second medium, such as the above mentioned side barriers, with a much lower specific electric conductivity, the vector direction of the current density and the electric field strength is substantially tangential to the boundary surface. Thus, the non-conductive side barriers will prevent an electric current from entering and penetrating it.

The effect of the side barriers on the current distribution along the active part of the electrode element surface is to homogenize the current distribution. The barriers act as barriers to current lines, that is lines such that, at every point of them, the current density vector at that point is tangential to the line. Thus, the current lines will, in the vicinity of the surfaces of the barriers, be directed along these surfaces.

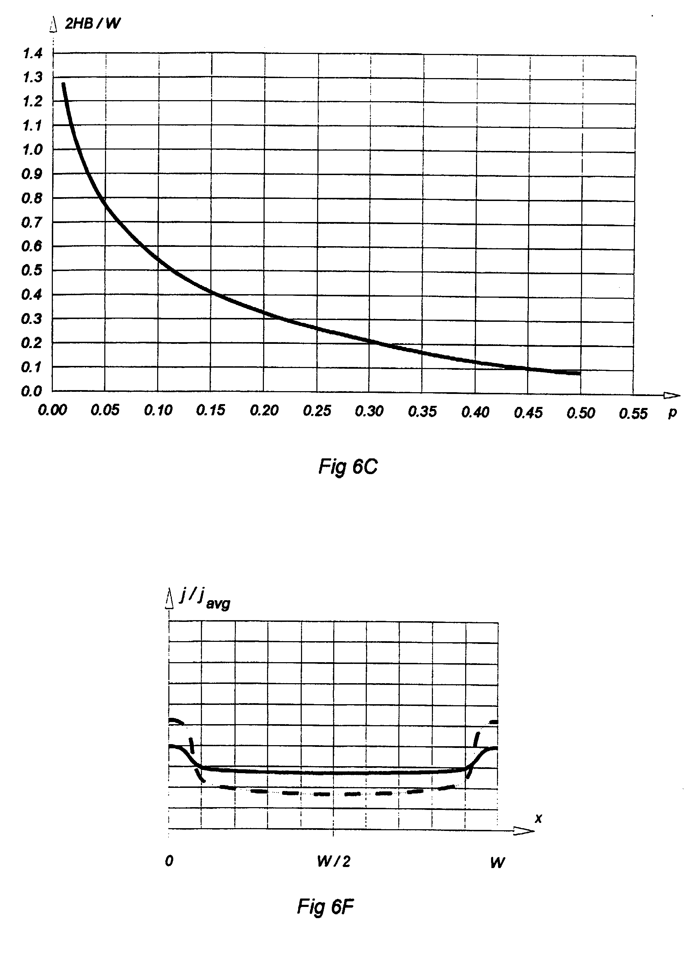

Figure 6C illustrates the homogenizing effect of the side barriers on the current distribution as due to the geometrical shape of the electrode element. Figure 6C shows on the vertical axis a relation between the height of the side barriers and the width of the active part of the electrode element, expressed as a ratio 2HB/W, and on the horizontal axis a factor p expressing the homogenizing effect of the side barriers, where p = (Jmax - Jmin) /Javg. Jmax and Jmin are the maximum and the minimum local current densities at a section with an arbitrary y -coordinate y = Ly and Javg is the average value of the current density at that section. The diagram shows that already for HB = W/6, the difference between Jmax and Jmin in relation to Javg will be only 20 %, which can be considered sufficient for most practical purposes.

Figure 6D shows the normalized local current density of an electrode element according to figure 6A, at a section with the y-coordinate Ly. The normalized current density for an embodiment as described in connection with figure 6A is shown in plain line and for comparison, the corresponding normalized current density of figure 3B, that is for a similar electrode element but without side barriers, is shown in figure 6D in dashed line. Figure 6D shows that for this third embodiment of the invention, an for practical purposes even current density distribution can be achieved.

Figure 6E shows the normalized local current density of an electrode element according to figure 6A, at a section with the x-coordinate x = W/2. Figure 6E shows that the normalized current density increases rapidly in the neighborhood of the coordinates y = 0 and y = L, that is the y-coordinates of the end edges of the electrode element, due to the geometrical configuration of the active part of the electrode element.

Figure 6F shows the normalized local current density at the surface of an electrode element according to figure 6A, provided with two current feeders as described in connection with figure 5C, to constitute a fourth embodiment of the invention. The figure shows in plain line the current density at a section with the y-coordinate
y = Ly, and for comparison, shown in dashed line, the current density distribution
as illustrated in figure 5B, that is in embodiment without side barriers. The figure shows that the effect of the side barriers is to further reduce the difference between Jmax and Jmin, in this case with a factor about four times.

In this context, an electrically non-conductive material means that the material has a specific electric resistivity several orders of magnitude, typically at least ten, higher than the specific electric resistivity of the sea water. For material such as polyethylene or polypropylene, the specific electric resistivity is in the order of 10¹² to 10¹⁵ Ω∗m.

The material of the beams, or the material in the above mentioned layers of non-conductive material, is selected such that it maintains its lower specific electric conductivity during long-time immersion in sea water, that is during the service life of the electrode.

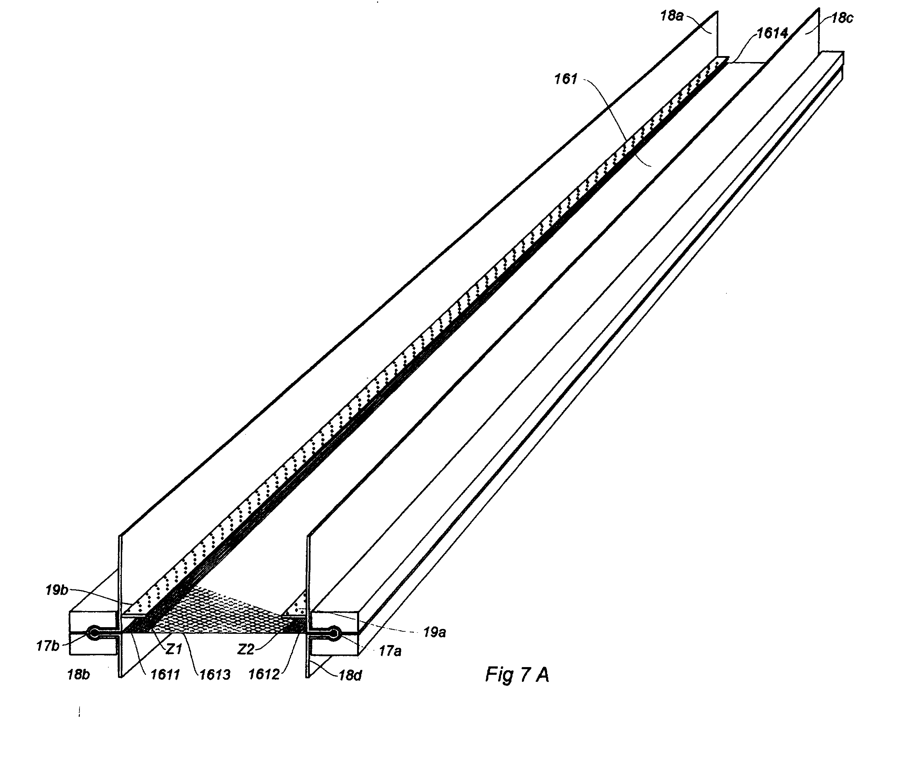

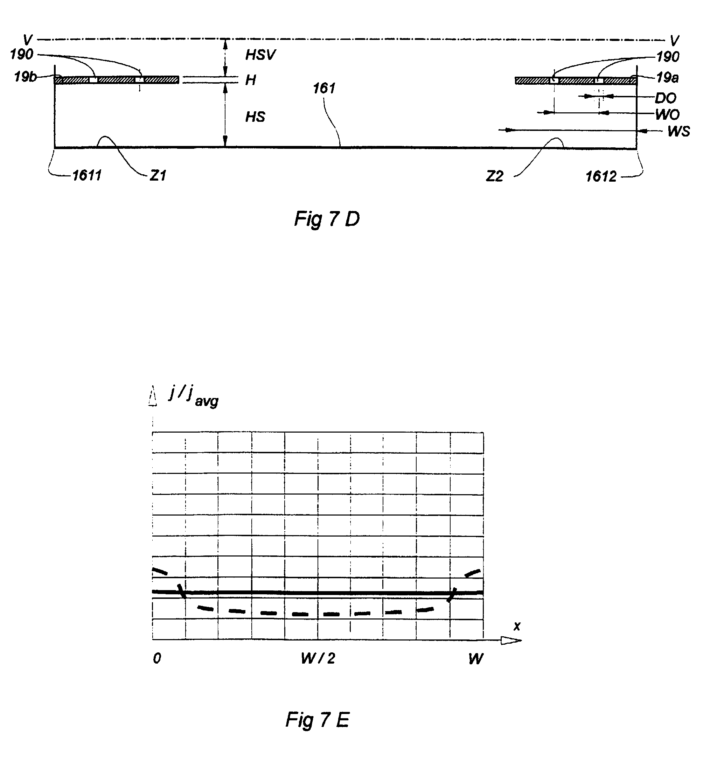

Figure 7A shows a fifth embodiment of the invention. The figure shows in a perspective view a sub-electrode as described in connection with figure 6A, provided with two current feeders as described in connection with figure 5A, and further with a first smoothing screen 19a and a second smoothing screen 19b, running one along each of the first and the second borders, respectively, of the active part of the electrode element. The screens are shaped as beams with a rectangular cross section and manufactured of an electrically non-conductive material with similar characteristics as mentioned for the beams constituting the side barriers or at least having their surfaces covered by a layer of such a non-conductive material.

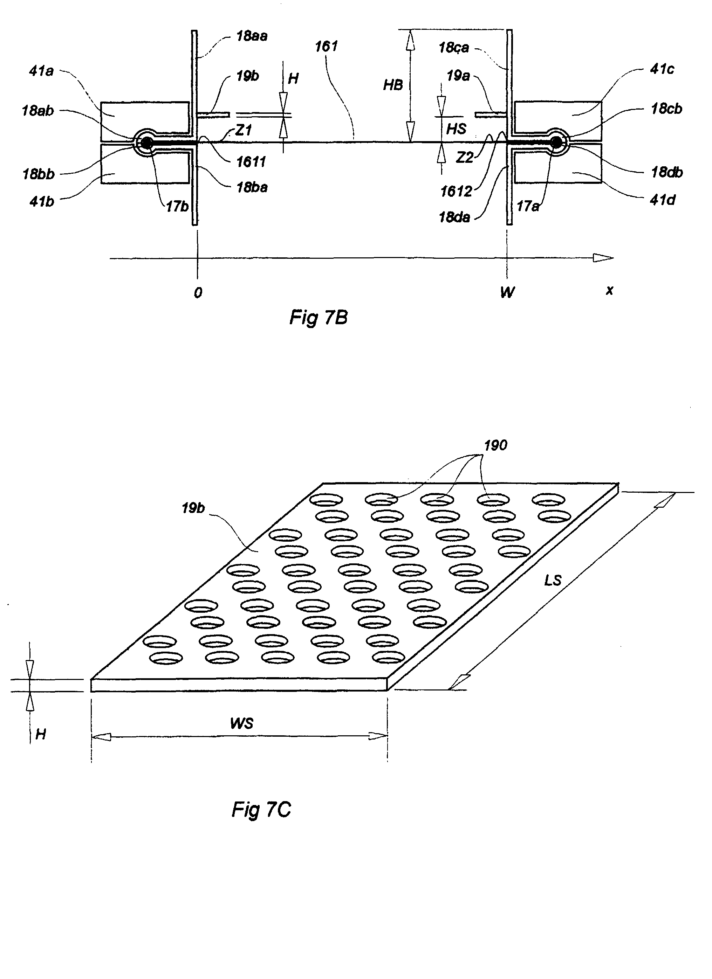

The screens are, in the example illustrated in figure 7A arranged so that their surfaces facing the electrode element have their planes parallel to the plane of the surface of the active part of the electrode element. As shown in more detail in figure 7B, the screens are located at the legs 18aa and 18ca, respectively, at a distance HS in the positive z-direction from the electrode element so that their projections on the surface of the active part of electrode element in the z-direction, that is in a direction perpendicular to that surface, cover a first zone Z1 and a second zone Z2 of the surface of the active part of the electrode element, which zones are adjacent to the first and to the second border, respectively, of the active part. The zones are in figure 7A indicated as shaded parts of the electrode element. The smoothing screens are held in place by fastening means not shown in the figure.

Figure 7C shows in a perspective view the screen 19b, however, in the figure shown with an extension LS in the y-direction which is shorter in relation to the extension WS in the x-direction than is usually the case in a practical application. As illustrated in the figure, the screen is perforated by a plurality of openings 19o, in a direction substantially perpendicular to the plane of the electrode element, that is in the z-direction, and the thickness of the screen in that direction is labeled H. For the sake of clarity, only of few of the openings are labeled in the figure. The equivalent specific surface resistivity ρₑ of the screen can be expressed as ρₑ = ρ_{w} * H/k, where ρ_{w} is the specific volume resistivity of the sea water, and k is a factor, less than one, expressing the ratio between the total area AO of the openings 19o as projected on the surface of the screen and the area AS = LS * WS of the surface of the screen, that is k = AO/AS <1.

The effect of the screens is to reduce the current density in the conductive medium in the vicinity of the screens on those sides of them that are not facing the active part of the electrode element. As have been demonstrated above, the vicinity of the borders of the active part of the electrode elements are zones which, due to their geometrical shape, have high local current densities. In particular, by locating the screens along these borders, the effect of the screens will be to homogenize the current distribution along a direction between the first and second borders in the vicinity of the active part of the electrode element, vicinity here meaning at a distance HSV, in the z-direction, from that side of the screen which is opposite to the side facing the active part of the electrode element. The distance HSV will be explained below,

Figure 7D shows in a schematic end view of the sub-electrode according to figure 7A some geometrical relations at a section with constant y-coordinate through the smoothing screens 19a, 19b and the electrode element 161. Assuming that the plane of the electrode element is parallel to the plane of the sea surface, the first zone Z1 of the active part of the electrode element adjacent to its first border 1611 and the second zone Z2 of the active part of the electrode element adjacent to its second border 1612, both have the same width WS in the x-direction as the screens and the same length in the y-direction as have the screens. The cross-section distance of the openings 19o (their diameter in case they have a circular shape) is labeled DO and their mutual distances in the x-direction with WO. A plane V-V parallel to the plane of the electrode element is indicated with a dashed-dotted line at the distance HSV in the z-direction from the screens. It can be shown that the above mentioned homogenizing effect on the current distribution is achieved to a desired degree for distances HSV which are greater than the greatest of the cross-section distance DO of the openings and the distance WO between the openings. The distance HS between the electrode element and the screens in the z-direction can be put to zero, that is the screens are located at the surface of the electrode element. However, to facilitate water circulation at the surface of the active part of the electrode element, preferably the distance HS should be selected to be of similar magnitude as the cross-section distance of the openings.

By choosing the parameters thickness H, the number and the areas of openings as well as their distribution over the surface of the screens, it is thereby possible to influence the local current density distribution at a selected distance from the electrode element to achieve a desired result.

Figure 7E shows the normalized local current density of an electrode element according to figure 7A, at a section with the y-coordinate Ly, and as seen at a distance from the surface of the electrode element selected as above described. As comparison, the current density according to figure 6F, that is without smoothing screens, is shown in dashed line. The diagram shows that with smoothing screens according to this embodiment of the invention, it is possible to achieve an practically even current distribution in the x-direction at a selected distance from the surface of the electrode element.

Typically, a strip as illustrated in figure 2C has a length L = 16,5 m and a width W = 0,5-1,2 m. As demonstrated above in connection with figure 6C, the height HB of the barriers 18aa, 18ca (figure 6B) typically in the order of 0,2 m will give a satisfactory homogenizing effect. Also typically, the distance D between the elongated current feeders 17a, 17b and the corresponding borders of the active part of the electrode element can be in the range of 0,2 m, the thickness H of the smoothing screens in the range of a few millimeters up to a few centimeters and the diameter of the openings a few centimeters or less.

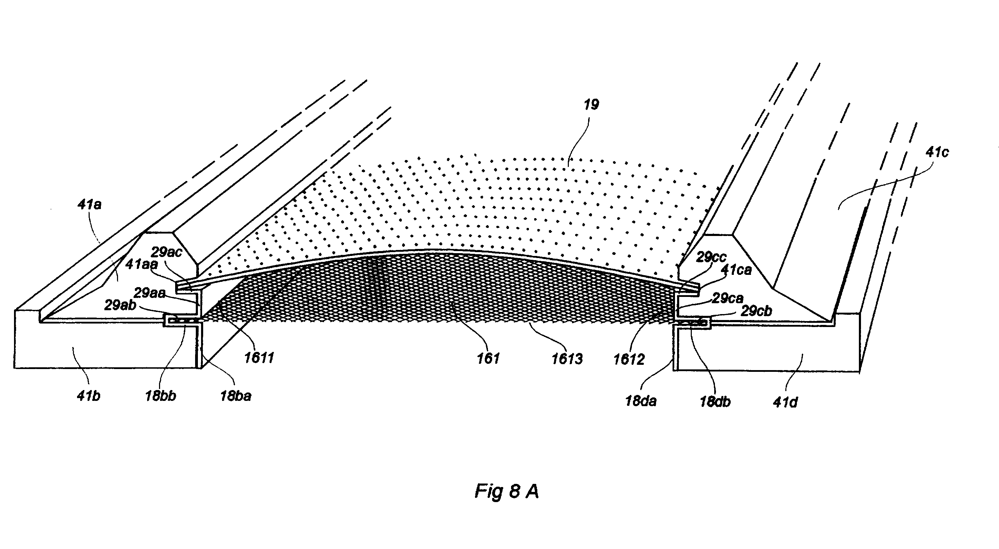

Figure 8A shows in a perspective view a sixth embodiment of the invention. Parts of the electrode element 161 are extending in between the concrete slabs 41a and 41b and in between the concrete slabs 41c and 41d, respectively (current feeders and /or feeding points are not shown in this figure). The concrete slabs 41a and 41c are provided with recesses 41aa and 41ca, respectively, in which a smoothing screen 19 of similar kind as described in connection with figures 7A and 7C is positioned. In this embodiment of the invention, however, the screen has such dimensions in the x-direction and in the y-direction that its projection on the surface of the active part of the electrode element, in the z-direction, completely covers the surface of the active part of the electrode element.

Beams of an electrically non-conductive material are arranged at the concrete slabs in a similar way as described above in connection with figure 6A, however, in this embodiment the beams located at the surface of the electrode element which faces the smoothing screen have a U-profile. The last mentioned beams have respectively legs 29aa, 29ab and 29ac, and legs 29ca, 29cb and 29cc. The beams corresponding to the beams 18b and 18d of figure 6A have legs 18ba and 18bb, and legs 18da and 18db, respectively. The legs 29ab and 18bb respectively 29cb and 18db are formed so that they enclose the parts of the electrode element which extend in between the concrete slabs. The borders 1611 and 1612 of the active part of the surface of the electrode element thus are located at the edges of the legs 29ab and 29cb, respectively, which are facing each other. The smoothing screen 19 rests against the legs 29ac and 29cc, respectively, which legs have their planes parallel to the plane of the electrode element. The screen has a bent shape in the x-direction to better withstand the weight of the ballast (not shown). The legs 29aa, 29ab and 29ac constitute a first electrically non-conductive guiding means at the first border and the legs 29ca, 29cb and 29cc constitute a second electrically non-conductive guiding means at the second border, for diverting current emanating from the vicinity of said borders towards that part of the conductive medium which is located between the electrode element and the smoothing screen, current that would otherwise at least partly penetrate the concrete slabs and giving rise to a current distribution in the vicinity of the electrode element not controlled by the smoothing screen.

The legs 18ba and 18bb respectively 18da and 18db can preferably be given dimensions as described in connection with figure 6C. Also when the legs 29aa and 29ca are not dimensioned in the z-direction following the criteria described in connection with figure 6C, that is, not dimensioned as side barriers but as guiding means only, a homogenizing effect on the current distribution along a direction between the first and second borders in the vicinity of the active part of the electrode element will be achieved as seen from the side of the screen that is opposite to the surface of the active part of the electrode element.

In the embodiment as described in connection with figure 7B, the leg 18ab and the part of the leg 18aa which is located between the screen 19b and the surface of the electrode element constitute the first guiding means, and the leg 18cb and the part of the leg 18ca which is located between the screen 19a and the surface of the electrode element constitute the second guiding means.

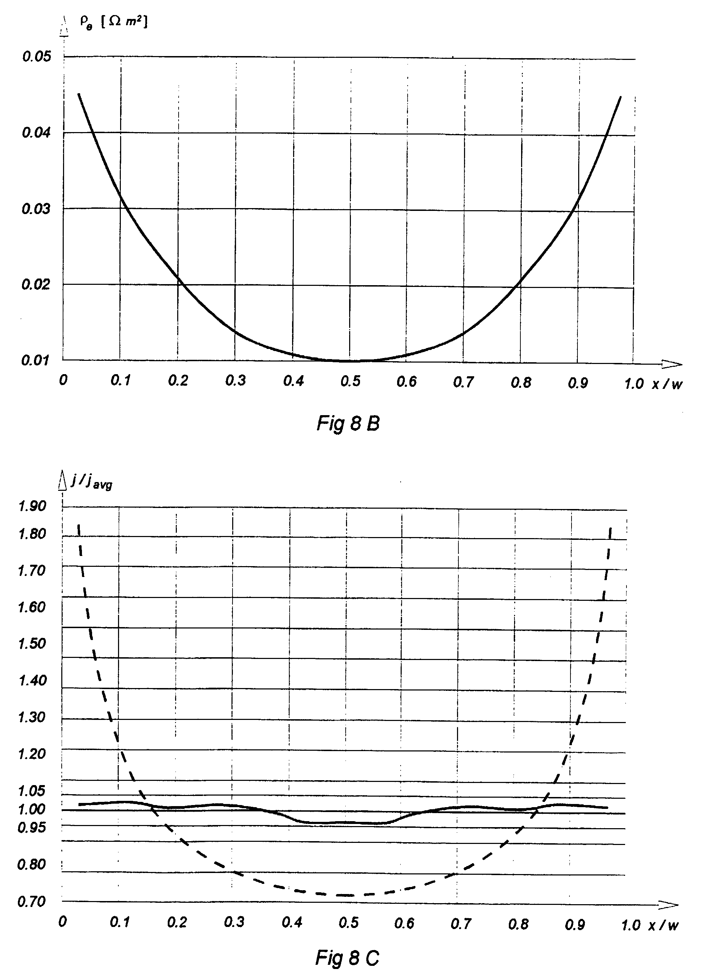

Figure 8B shows on the vertical axis the equivalent specific surface resistivity ρₑ of a smoothing screen according to figure 8A at a section with a constant y-coordinate, and the horizontal axis shows the distance along the x-axis at the section. The diagram illustrates a resistivity distribution in the x-axis direction to be achieved by the screen and attempted to homogenize the current density distribution at the section to a desired degree.

Figure 8C shows, at the same section, on the vertical axis in dashed line the normalized local current density J/Javg at the surface of the electrode element according to figure 8A, for the case that there is no smoothing screen, and, in whole line, the normalized local current density for a sub-electrode according to figure 8A, at a distance above the screen as described above in connection with figure 7D. As illustrated in the figure, a practically even current density distribution is achieved with the equivalent specific resistivity distribution according to figure 8B.

Should the current distribution have shown greater deviations between the maximum- and the minimum values of the local current density than is required in the particular case, a modified distribution of the equivalent specific surface resistivity ρₑ should be attempted and the current density distribution recalculated. When the desired current density distribution is achieved, the smoothing screen is designed, by variation over the surface of the screen of one or more of the parameters H and k as described in connection with figure 7C, so as to achieve the distribution of the equivalent specific surface resistivity ρₑ according to figure 8B.

The figures 8B and 8C are based on a specific polarization resistivity b = 0,01 Ωm² of the electrode element, which is representative for coated titanium, and a specific volume resistivity of the sea water ρ_{w} = 0,2 Ωm.

To protect a smoothing screen as described in connection with figure 8A, an electrically conductive protective layer (not shown in the figure) can be placed and fixed above the smoothing screen. Such a protective layer may serve the purpose of preventing human beings, fish and other aqueous organisms from reaching the openings in the smoothing screens, in which the local electric field strength may reach potentially harmful levels.

In the purpose to increase their mechanical strength, the smoothing screens can also be made of a conductive material covered by a non-conductive coating or natural films, for example titanium covered with a passivating non-conductive film.

As demonstrated in connection with figures 4B, 5B, 6D, 7E and 8C, the current distribution in the x-direction of the surface of the sub-electrode/electrode can be homogenized to a desired degree by the means provided according to the invention as described above. However, these means do not affect the current distribution in the y-direction and in particular not the rapid increase in local current density for the coordinates y = 0 and y = L, that is the y-coordinates of the end edges of the electrode element, which increase is due to the geometrical configuration of the active part of the electrode element.

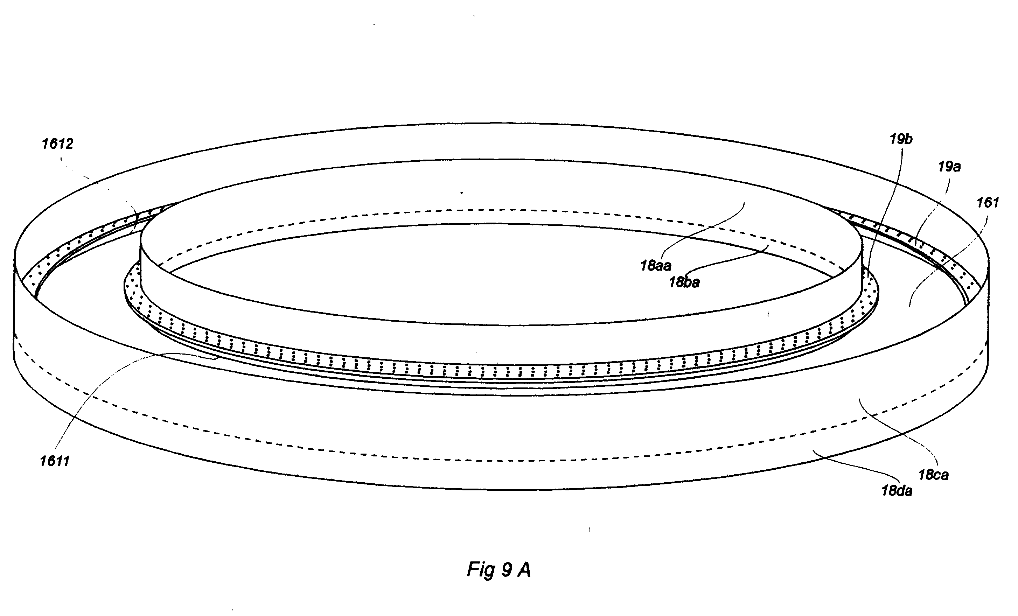

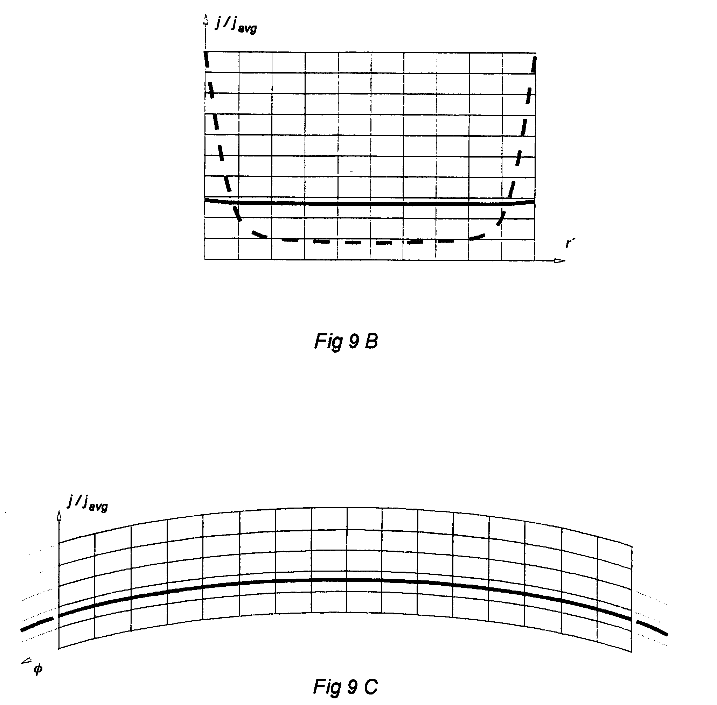

Figure 9A shows in a perspective view a seventh embodiment of the invention. The electrode element 161 is of similar kind as described in connection with figure 2C, that is, it is realized as a substantially flat, elongated strip with a first and a second border 1611, 1612 respectively, bordering its active part. According to this embodiment of the invention, the strip is bent in such a way that the first and the second border each forms a closed curve, so that the active part of the electrode element has the shape of a closed ring, preferably in the form of a circle,. The electrode element is provided with two current feeders (for the sake of clarity not shown in figure 9A), running along and coupled to the respective borders as described above in connection with figure 5A, with side barriers 18aa, 18ba at the first border and side barriers 18ca, 18da at the second border as described in connection with figure 6B above and each forming a cylindrical surface, and with smoothing screens 19a, 19b as described above in connection with figure 7A.

The x-y-z-coordinate system used corresponds in this embodiment of the invention to a polar ϕ-r-z-coordinate system, wherein the r-coordinate replaces the x-coordinate and the ϕ-coordinate replaces the y-coordinate. The first border has an r-coordinate r = R₁ and the second border an r-coordinate r = R₂. The ϕ-coordinate is directed in the circumferential direction of the electrode element and the z-coordinate is directed perpendicular to the ϕ-r-plane.

Figure 9B shows the normalized local current density of an electrode element according to figure 9A, at a section with an arbitrary ϕ-coordinate, at a distance above the screens in the z-direction as described above in connection with figure 7D. The figure shows in plain line the actual current density J at a relative distance r' = (r-R₁)/(R₂-R₁) from the first border in the radial direction of the electrode element, and Javg is the average value of the current density at that section. The horizontal axis is the r'-axis.

Figure 9B shows for comparison, in dashed line, the corresponding normalized current density, due to the geometrical configuration of the electrode element, of a similar electrode element but without current feeders, side barriers and smoothing screens. Figure 9B illustrates that for an embodiment of the invention as described in connection with figure 9A, a for practical purposes even current distribution in the r-direction can be achieved at a selected distance from the surface of the electrode element.

Figure 9C shows the normalized local current density J/Javg of an electrode element according to figure 9A, where J is the actual current density at an arbitrary relative distance r' = (r-R₁)/(R₂-R₁) from the first border, in the radial direction of the electrode element, and Javg is the average value of the current density along the electrode element in the ϕ-direction. The horizontal axis is the ϕ-axis and the figure shows only a part of the circumference of the electrode element. Figure 9C shows that for an embodiment of the invention as described in connection with figure 9A, where the electrode element is given the form of a circle, an even current distribution in the ϕ-direction is achieved. Also when the sub-electrode is given the shape of other closed curves, an for all practical purposes even current distribution in the ϕ-direction can usually be achieved.

In this embodiment, the side barriers 18aa, 18ba and the side barriers 18ca, 18da could be made in one piece as seen in the z-direction. Although in the embodiment according to figure 9A, the combined effect of current feeders, side barriers and smoothing screens is employed, it is from the above description of these features obvious that with only one of them or with any combination of at least two of them, a favorable influence on the current distribution in the r-direction will be achieved.

The configuration illustrated in figure 9A may be the only electrode element comprised in an electrode, or, as the case may be, one of several electrode elements in an electrode, each coupled to a separate feeder cable.

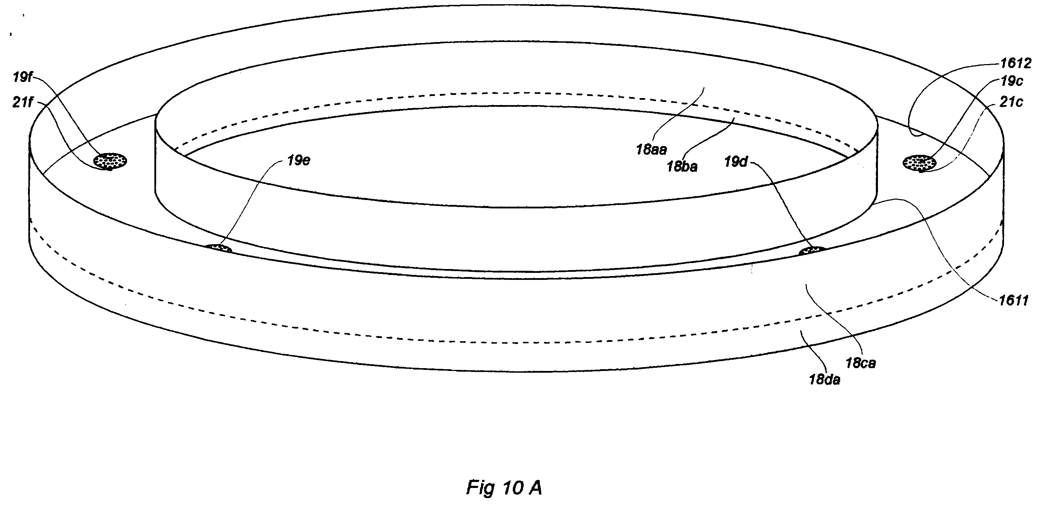

Figure 10A shows in a perspective view an eight's embodiment of the invention, similar to the one described in connection with figure 9A, but wherein the current feeders, running along and coupled to the respective borders, are replaced by a plurality of concentrated feeding points, preferably evenly spaced in the ϕ-direction and located at a relative distance r' = (R₂-R₁)/2 from the first border in the radial direction of the electrode element. Only the concentrated feeding points 21c-21f are visible in the figure. Each concentrated feeding point is fed from an interconnection cable or a feeder cable and is provided with a smoothing screen in the shape of a circular disc. The smoothing screens are made of a material similar to the one as described for the smoothing screens in accordance with figure 7A, and are located at a distance HS in the z-direction above the electrode element. Only the screens 19c-19f are visible in the figure.

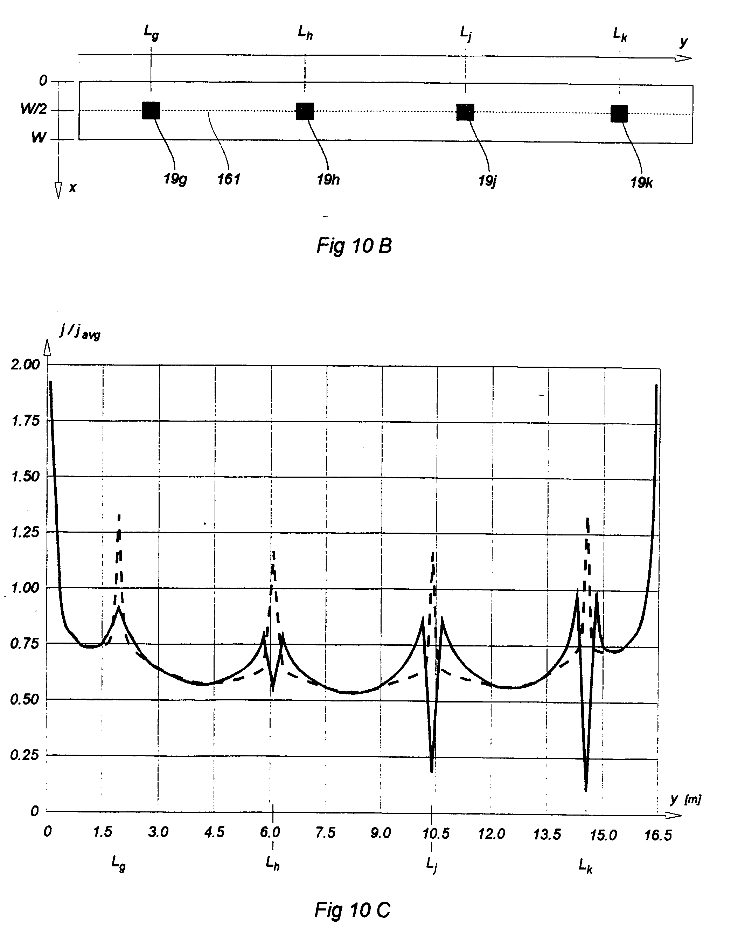

Figures 10B shows, as seen from above, an electrode element 161 in the form of a metal strip. It has four concentrated feeding points 21g, 21h, 21j, 21k (not visible in the figure) with the x-coordinate W/2 and the y-coordinates Lg, Lh, Lj and Lk, respectively. Each feeding point is provided with a smoothing screen 19g, 19h, 19j, 19k, in this case of quadratic shape, located at a distance HS in the z-direction above the feeding point. The parameters of the screens have been selected such that the equivalent specific surface resistivity of the screen 19g is five times higher, of the screen 19h ten times higher, of the screen 19j fifty times higher, and of the screen 19k hundred times higher than the specific polarization resistivity of the material of the electrode element.

Figure 10C shows in plain line the normalized local current density of the electrode element according to figure 10A, at a section with the x-coordinate W/2, and as seen at a distance as described in connection with figure 7D from the surface of the smoothing screens that is not facing the electrode element. As comparison, the current distribution without smoothing screens is shown in pointed line. The diagram illustrates that with smoothing screens according to this embodiment of the invention, the local current density maxima which would otherwise appear at and in the vicinity of the concentrated feeding points, can be reduced to a desired degree and that the degree of reduction can be chosen by a particular choice of parameters of the screens. Thus, also with this embodiment of the invention, the current distribution in the vicinity of the surface of the sub-electrode/electrode is homogenized.

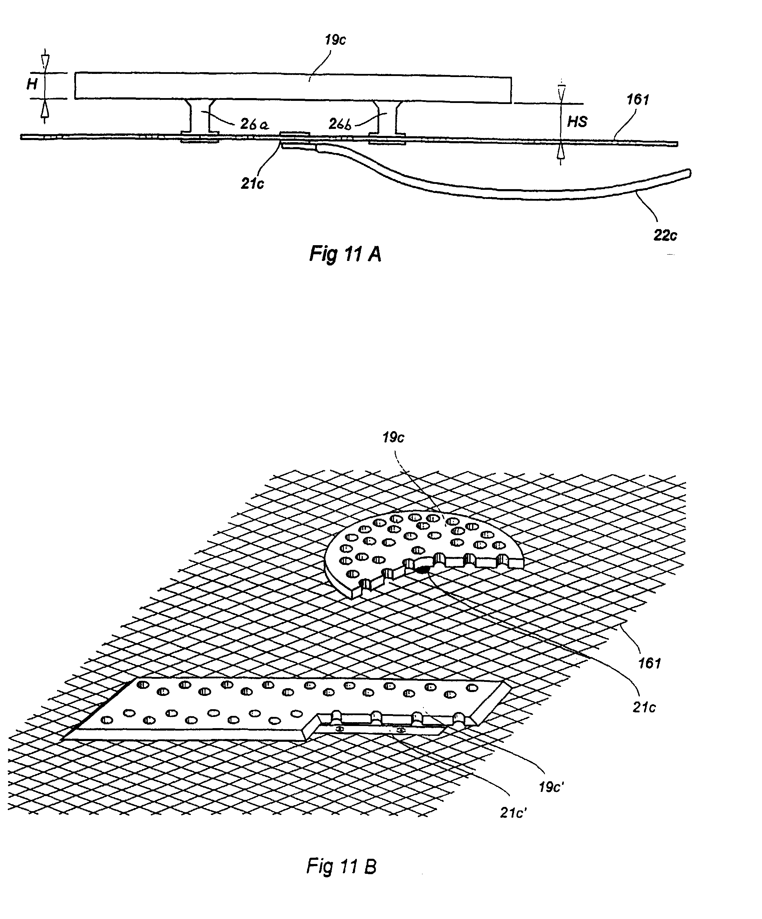

Figure 11A shows in a side view details of the concentrated feeding point 21c, provided with a screen 19c as described in connection with figure 10A, and a part of the electrode element 161. The screen 19c is located so that its projection on the surface of the active part of the electrode element, in the z-direction towards the electrode element, covers the concentrated feeding point and a selected vicinity thereof at the active part of the electrode element, preferably, when the screen has the shape of a circular disc, so that the center of the disc has the same rϕ-coordinates as the concentrated feeding point 21c. The feeding point is coupled to an insulated interconnection cable 22c, which is in turn coupled to a feeder cable (not shown). The screen is fixed to the electrode element at the distance HS from the surface of the electrode element by distance spacers 26a, 26b, made of a material with similar characteristics as the material of the screens.

Figure 11B shows in a perspective view a part of the electrode element 161 and illustrates, in addition to the above described embodiment of the concentrated feeding point 21c and the screen 19c, an embodiment of an elongated feeding zone in the shape of a ribbon 21c' welded to the electrode element (feeder/interconnection cables are not shown in this figure). In this case, the screen 19c' is given a rectangular shape so that its projection on the surface of the active part of the electrode element, in the z-direction towards the electrode element, covers the feeding zone and a selected vicinity thereof. The concentrated feeding point 21c as well as the feeding zone 21c' constitute feeding areas of the electrode element and the smoothing screens 19c and 19c', respectively, cover the feeding area and a selected portion of the active part of the electrode element in the vicinity of the feeding area.

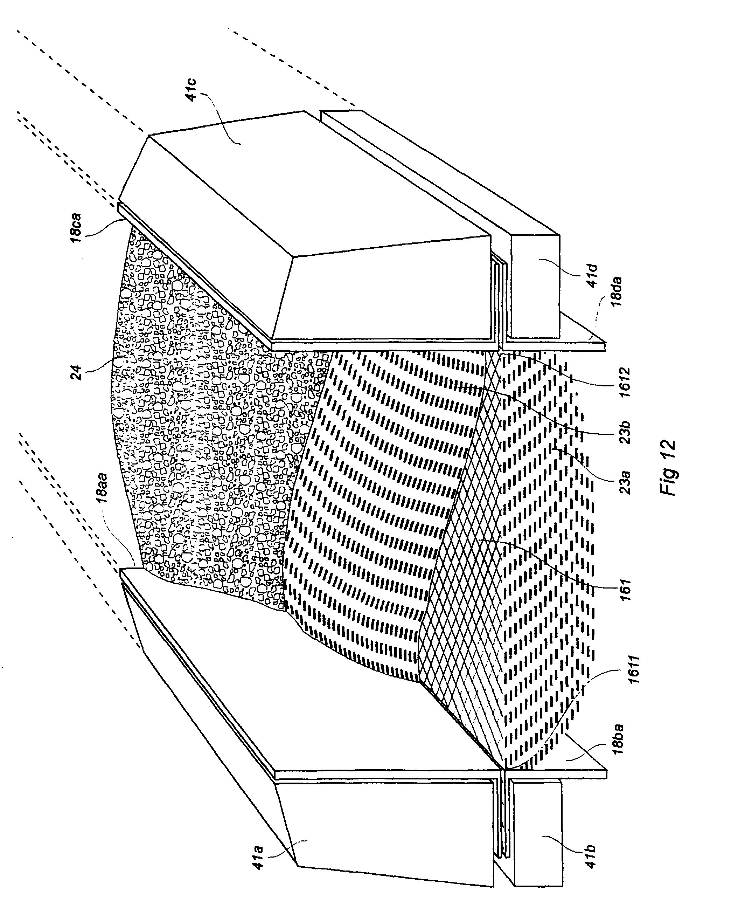

An advantageous development of the invention is illustrated in figure 12. The figure shows in a perspective view a part of an electrode element 161 provided with side barriers as described in connection with figure 6A. According to this development of the invention, the active part of the electrode element is embedded between an upper layer 23b and a lower layer 23a, constituting a backfill for the electrode element. The layers comprise an electronically conductive material, such as a carbonaceous material, for example coke. The upper layer 23b is covered by a thin layer of gravel 24 to keep the layer 23b in place.

By this development of the invention, the intensity of electro-chemical reactions between the material of the electrode element and the sea water will be decreased, and accordingly also the amounts of reaction products emanating from such reactions.

Such an embedding is of course also applicable to the ring shaped configuration of the sub-electrode/electrode as described in connection with figure 9A.

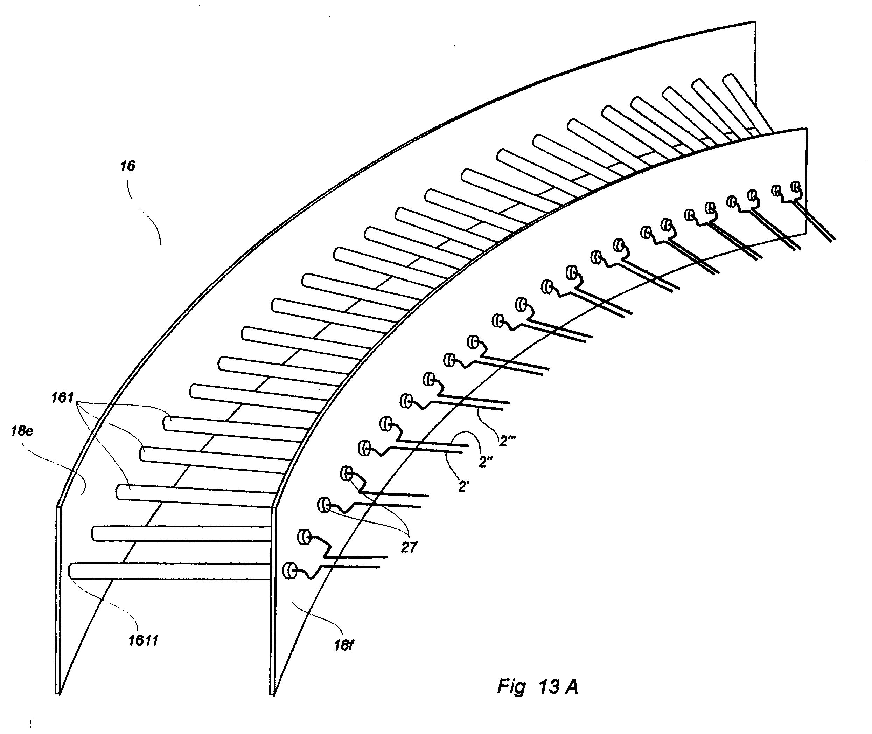

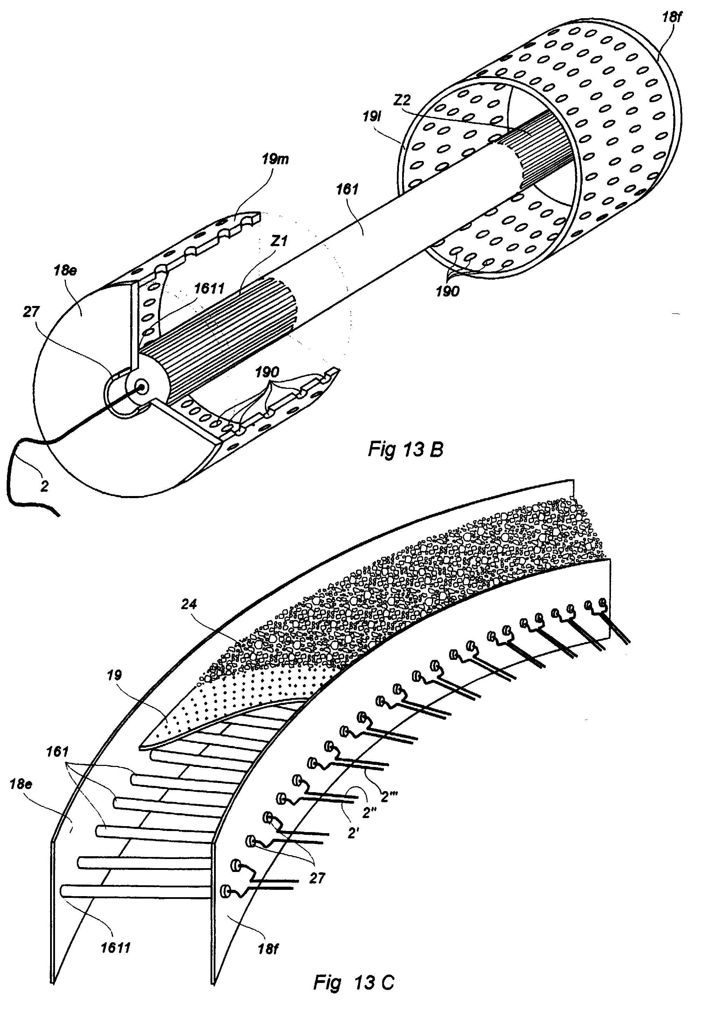

Figure 13A shows in a perspective view a ninth embodiment of the invention, wherein the sub-electrode 16 comprises a plurality of electrode elements 161, each having a tubular or cylindrical shape as shown in figure 2E. The electrode elements are mounted between and supported by two side barriers 18e, 18f. The barriers have an elongated shape and are each bent to the shape of a circular sector. A plurality of similar sub-electrodes, preferably prefabricated, can be mounted at the sea bottom so as to form a closed ring, analogous to the embodiments illustrated in figures 9A and 10A. The electrode elements are mounted in such a way that their length axises will be oriented in substantially radial directions in the so formed circular ring and substantially perpendicular to the tangent planes to the cylindrical surfaces formed by the side barriers. The barriers are manufactured of a non-conductive material such as described above. Each electrode element is at one of its cross-section surfaces coupled to a cable (of which only the cables 2', 2" and 2"' are labeled in the figure). Each cable is electrically insulated from the surrounding medium and coupled to its respective electrode element via an encapsulated cable connection 27, also electrically insulated from the medium. The active part of an electrode element is thus its envelope surface, delimited by a first border 1611 and a second border 1612 (the second border is concealed in the figure). The borders are circular lines along which the envelope surface of the electrode element adjoins the respective barrier.

The normalized local current density along an electrode element of such a tubular shape will, without the side barriers, be similar to the one as illustrated in figure 3B, with the exception for the local maximum at x = W/2 shown in that figure. Thus, the current density increases rapidly in the vicinity of the ends of the electrode element, that is at the borders of its active part. As is understood from the above description, the effect of the barriers 18e, 18f, on the current distribution will be similar to the one described in connection with figure 6A and illustrated in figure 6D, that is, to homogenize the current distribution along the axis of the tubular electrode elements.

Alternatively, the barriers 18e, 18f can be given the shape of circular sectors as seen in a plane parallel to their surfaces so that the electrode elements will have their length axises oriented substantially in an axial direction of the circular ring formed by the sectors.

To minimize the total area at the sea bottom covered by the electrode, an electrode can be constituted by at least two of the above described ring configurations, with different diameters, arranged concentrically.

In another alternative, the barriers 18e, 18f can be given flat elongated shapes so that the sub-electrode will be constituted by the two parallel barriers and electrode elements having their length axises oriented substantially parallel to each other. In this case, the distances between the electrode elements are preferably chosen to be unevenly distributed along the sub-electrode so as to homogenize the current distribution within the sub-electrode. A plurality of such sub-electrodes can be arranged in a star-shaped configuration to form an electrode.

Figure 13B illustrates in a perspective view a tenth embodiment of the invention, in which an electrode element 161 having a tubular or cylindrical shape as shown in figure 2E. The electrode element is provided with two side barriers 18e, 18f, manufactured of a non-conductive material such as described above, but in the shape of circular discs, and located one at each end of the electrode element. According to this embodiment, the electrode element is further provided with two smoothing screens 191, 19m. The screens are of tubular shape and arranged coaxial with the electrode element, one at each end of the electrode element, in such a way that they enclose the electrode element and so that their projections on the surface of the active part of the electrode element, in the radial direction of the electrode element, cover zones Z1 and Z2 of the active surface of the electrode element, which zones are adjacent to the first border 1611 and two the second border 1612, respectively. The zones, in the figure indicated as shaded, that is striped, parts of the electrode element, will in this case be parts of the envelope surface of the electrode element. The smoothing screens are held in place by fastening means not shown in the figure. The screens are, except from being of tubular shape, similar to the ones described in connection with figures 7A-7D, and their effect on the current distribution along the tubular electrode element will be similar to the effect described in connection with figures 7C-7D, that is, to homogenize the current distribution along the length axis of the tubular electrode element. A feeder cable 2, electrically insulated from the surrounding medium, is coupled to the electrode element via an encapsulated cable connection 27, also electrically insulated from the medium.

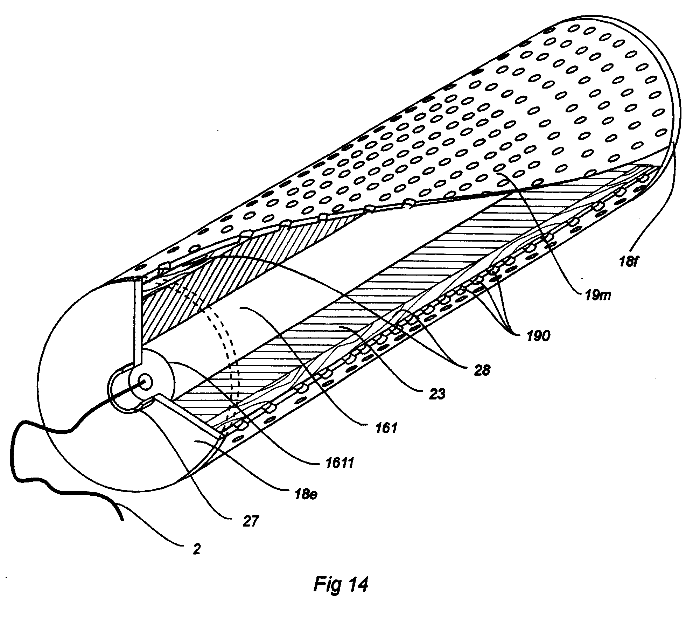

Alternatively, and often preferable with respect to for instance mechanical design considerations, the two smoothing screens 191, 19m can be replaced by one smoothing screen 19m (see figure 14), arranged coaxial with the electrode element and so as to cover, as seen in the radial direction of the electrode element, the entire envelope surface of the electrode element.

In the embodiment of the invention as illustrated in figure 13A, each electrode element can be provided with smoothing screens as shown in figure 13B, or, as the case may be, with one screen, the projection of which covering the entire envelope surface of the electrode element. Alternatively, as illustrated in figure 13C, the sub-electrode 16 can be provided with one screen 19, common for all the electrode elements, located between the side barriers, and the projection of which in the axial direction of the circle sector, that is in a direction perpendicular to a plane through the length axises of the electrode elements, covers the projections of the envelope surfaces of the electrode elements on that plane. A protective layer 24 of gravel is applied on the smoothing screen as a mechanical protection.

Figure 14 shows in a perspective view an advantageous development of the embodiment described in connection with figure 13B. The projection of the smoothing screen 19m on the envelope surface of the electrode element, in the radial direction of the electrode element, covers the entire envelope surface of the electrode element. The space limited by the side barriers 18e, 18f, the envelope surface of the electrode element and the smoothing screen 19m is filled with a backfill 23 comprising an electronically conductive material, such as a carbonaceous material, for example coke, embedding the active part of the electrode element in the backfill. As described in connection with figure 12, by this development of the invention, the intensity of electro-chemical reactions between the material of the electrode element and the sea water will be decreased, and accordingly also the amounts of reaction products emanating from such reactions.

To ensure that a sufficient contact pressure between the envelope surface of the electrode element and the backfill, a plurality of elongated ribbons 28, running in parallel with the longitudinal axis of the electrode element, located adjacent to that surface of the smoothing screen which faces the backfill, and, preferably, evenly distributed along the periphery of the screen. The ribbons are manufactured from a material which increases its volume when coming into contact with water, in this particular case sea water or sea water impregnated matter. Such a material can for example be pressed wood. The dimensions of the holes in the smoothing screen, the grain size of the backfill and the cross-section dimensions of the ribbons have to be coordinated to each other to ensure the proper functioning of the embodiment shown in figure 14.

A plurality of sub-electrodes comprising an electrode element as described in connection with figure 13B and with figure 14 can be arranged along a contour line forming a closed curve and interconnected to each other and to the electrode line of the HVDC transmission system. A contour line is to be understood as the trace connecting the sub-electrodes. The contour line of the sub-electrodes can typically have the shape of a circle.

The invention is not limited to the embodiments as described above but also other embodiments as exemplified below are feasible within the scope of the invention.

An electrode element as illustrated in figure 2C, that is in the shape of an elongated strip, may be provided with current feeders coupled not only to the first and second border but also to the end edges.

Also other shapes than rectangular are feasible for flat electrode elements and the active part of the electrode element can be considered to have only a first border delimiting the active part of the electrode element. The current feeder can then also be given the shape of a closed loop. By covering a peripheral part of the electrode element with layers of a non-conductive material as described in connection with figure 5D, the actual current inflow to the active part of the electrode element can be controlled in a manner as described in connection with figure 5D, so as to achieve a homogenized current distribution on the active part of the electrode element.

The electrically non-conductive side barriers as described in connection with figure 6A and the electrically non-conductive guiding means as described in connection with figure 8A can alternatively be realized as layers of an electrically non-conductive material coated on the concrete beams, or, when made as separate parts, have only those of their surfaces which are directed towards the electrode element covered by a layer of such a non-conductive material, these layers thereby constituting said side barriers and said guiding means, respectively.

Substantially the same homogenizing effect due to side barriers according to the invention can be achieved also with side barriers and electrodes with different geometries. Thus, the side barriers as described in connection with figure 13B must not necessarily be in the shape of circular discs, but could also be in the shape of plates with, for example, a rectangular or quadratic form. Also as an example, for a cylindrical electrode, the side barriers could exhibit a convex surface towards that part of the electrode on which the homogenizing effect is desired. However, the homogenizing effect achieved will depend on the dimensions of the side barriers as projected on a plane essentially perpendicular to the active part of the surface of the electrode, as well as on the shape of the barriers.

The following advantages will be achieved with the invention.

The maximum electrical field strength in the sea water can be held below a specified level and harmful environmental effect can thus be avoided.

With features according to the invention, it is possible to optimize, for a given application, the active parts of the electrode with respect to for instance material, size and form, as the from that optimization resulting electric field strength in the sea water can be reduced to a desired level.

The arrangement of the sub-electrode/electrode in a closed ring shape or as a ring of sub-electrodes, or in a plurality of concentric rings, results in a homogenous current distribution and a better utilization of the material in the electrode body.

With electrodes equipped with the features described in connection with the first to the seventh embodiment of the invention, the current density on the surface of the electrode body is homogenized, resulting in a better utilization of the material in the electrode body, and thus in a decreased size of the electrode. as compared to an electrode of conventional design. A considerably less electrode area is required without exceeding specified critical current density on the surface of the electrode and electric field strength in the sea water in the vicinity of the electrode.

Smoothing screens also acting as mechanical supports and providing mechanical protection for the electrode elements allow the use of fragile or brittle material for the electrode body, which materials could otherwise not be used for self-supporting electrode structures. Typical such electrode body materials are graphite, magnetite and silicon iron. Thus, use of brittle or fragile electrode body materials suited for both anodes and cathodes is made possible with electrodes designed according to the development of the invention, thereby giving the flexibility of polarity reversal of the HVDC transmission.

Smoothing screens at the electrode element allow for a thinner layer of protective gravel over the electrode and improves the reliability of the electrode with respect to for instance storms which would erode the gravel layer.

Typically, sea electrodes according to the invention can be assembled from prefabricated and standardized parts, such as plates, electrode elements and barriers, thereby significantly reducing the costs for the electrode.

The ring-shaped embodiments of the invention, as illustrated in figure 9A, can preferably be realized by welding together at the sea bottom a number of prefabricated sectors to form the closed shape.

## Claims

1. Sea electrode (15) for grounding of a high voltage direct current transmission system, comprising at least one electrically conductive electrode element (161, 162, 163) to be embedded in a conductive medium, such as sea water and/or sea water impregnated matter at the sea bottom, to be coupled to the transmission system via a feeder cable (2), to transfer between the medium and the transmission system a feeder cable current flowing in the feeder cable, the electrode element having at least a first border (1611), which delimits an active part of the surface of the electrode element, which active part is in electric contact with the medium when the electrode element is embedded in the medium, **characterized** in that the electrode element is provided with at least a first smoothing screen (19, 19b, 19c, 19c', 19m) having an electrically non-conductive surface, a projection of said first screen on the surface of the active part of the electrode element, in a direction perpendicular to the surface of that active part, covering at least a first zone (Z1) of the surface of that active part, which zone is adjacent to the first border, and with a first electrically non-conductive guiding means (18aa, 18ab, 18e, 29aa, 29ab, 29ac) at the at least first border for diverting current emanating from the vicinity of said border towards that part of the conductive medium which is located between said first zone and said first smoothing screen, so as to homogenize the current distribution in the vicinity of the active part, as seen from that side of said first smoothing screen that is opposite to the surface of the active part of the electrode element.

2. Sea electrode according to claim 1, wherein the electrode element has a first border (1611) and a second border (1612) between which is formed an active part of the surface of the electrode element, **characterized** in that the electrode element is provided with a second smoothing screen (19a, 191) having an electrically non-conductive surface, a projection of said second screen on the surface of the active part of the electrode element, in a direction perpendicular to the surface of that active part, covering a second zone (Z2) of the surface of that active part, which second zone is adjacent to the second border, and with a second electrically non-conductive guiding means (18ca, 18cb, 18f, 29ca, 29cb, 29cc) at the second border for diverting current emanating from the vicinity of the second border towards that part of the conductive medium which is located between said second zone and said second smoothing screen, so as to homogenize, along a direction between the first and second borders, the current distribution in the vicinity of the active part of the electrode element, as seen from those sides of said screens that are opposite to the surface of the active part of the electrode element.

3. Sea electrode according to claim 1, **characterized** in that said projection of the smoothing screen (19) covers all of the active part of the electrode element.

4. Sea electrode according to any of claims 1-3, **characterized** in that the electrode element has a substantially flat shape, and the at least one smoothing screen has a substantially flat shape.

5. Sea electrode according to any of claims 1-3, **characterized** in that the at least one electrode element has a cylindrical shape, and the at least one smoothing screen (191, 19m) has a tubular shape, enclosing the at least one electrode element substantially coaxial with the at least one electrode element.

6. Sea electrode according to claim 5, having at least two electrode elements of cylindrical shape, **characterized** in that each electrode element is provided with a smoothing screen having a tubular shape and enclosing the electrode element substantially coaxial with the electrode element.

7. Sea electrode according to claim 5, having at least two electrode elements of cylindrical shape, **characterized** in that each electrode element is provided with a smoothing screen having a tubular shape and which encloses the at least two electrode elements.

8. Sea electrode (15) for grounding of a high voltage direct current transmission system, comprising at least one electrically conductive electrode element (161, 162, 163) to be embedded in a conductive medium, such as sea water and/or sea water impregnated matter at the sea bottom, and to be coupled to the transmission system via a feeder cable (2), to transfer between the medium and the transmission system a feeder cable current flowing in the feeder cable, the electrode element having a substantially flat shape and wherein an active part of the surface of the electrode element is in electric contact with the medium when the electrode element is embedded in it, the electrode element having at least one feeding area (21c, 21c'), located at the surface of the active part of the electrode element, for coupling to the feeder cable, **characterized** in that the electrode element is provided with a smoothing screen (19c, 19c') having an electrically non-conductive surface, located at a selected distance (HS) from the surface of the active part of the electrode element, a projection of said screen on the surface of that active part, in a direction perpendicular to the surface of that active part, covering the feeding area and a selected portion of the active part of the electrode element in the vicinity of the feeding area, so as to homogenize the current distribution in the vicinity of the feeding area, as seen from that side of said smoothing screen that is opposite to the surface of the active part of the electrode element.

9. Sea electrode according to any of the preceding claims, **characterized** in that the active part of the electrode element is embedded in a backfill (23, 23a, 23b) comprising an electronically conductive material, such as a carbonaceous material.

10. Sea electrode according to claim 5, **characterized** in that the active part of the electrode element is embedded in a backfill (23) comprising an electronically conductive material, such as a carbonaceous material, located between the surface of the active part of the electrode element and said smoothing screen.

11. Sea electrode according to any of claims 4, 8 and 9, when claim 9 depends on claim 4, the electrode element having at least a first border (1611), which delimits an active part of the surface of the electrode element, **characterized** in that the electrode element is provided with at least one elongated current feeder (17a, 17b) for coupling to the feeder cable, and with electrically non-conductive means (18a', 18b') for electrically insulating the current feeder from the medium, when the electrode element is embedded in it, which current feeder is along its length coupled to the at least first border, thereby to homogenize the current distribution at the active part.

12. Sea electrode according to claim 11, wherein the electrode element has the shape of an elongated strip with a first border (1611) and a second border (1612) in the length direction of the strip and between which borders the active part of the surface of the electrode element is formed, **characterized** in that the at least one elongated current feeder is along its length coupled to at least one of the first and the second borders.

13. Sea electrode according to claim 11 or claim 12, **characterized** in that the electrode element comprises an insulated part adjacent to the at least first border, which part is provided with electrically non-conductive means (18a', 18b') for electrically insulating it from the medium when the electrode element is embedded in the medium, and in that said current feeder is coupled to the at least first border so that said insulated part of the electrode element is located between the current feeder an the at least first border.

14. Sea electrode according to any of claims 1-13, the electrode element having a first border (1611) and a second border (1612) between which is formed an active part of the surface of the electrode element, **characterized** in that the electrode element is provided with two electrically non-conductive side barriers (18a-18f), located one at each of the first and second borders, said side barriers having a substantial extension (HB) outwards from the active part of the electrode element so as to have a substantial extension into the medium when the electrode element is embedded in it, thereby to homogenize the current distribution at the active part along a direction between the first and second borders.

15. Sea electrode according to claim 14, having at least two electrode elements of cylindrical shape, **characterized** in that the at least two electrode elements are provided with one electrically non-conductive side barrier (18e) at their respective first borders, which side barrier is common to the at least two electrode elements, and with one electrically non-conductive side barrier (18f) at their respective second borders, which side barrier is common to the at least two electrode elements, thereby to homogenize the current distribution at the active part along a direction between the first and second borders for each of the electrode elements having said common side barriers.

16. Sea electrode according to claim 15, **characterized** in that it is provided with a smoothing screen (19) having an electrically non-conductive surface, located between said side barriers, a projection of said smoothing screen, in a direction perpendicular to a plane through the length axises of the at least two electrode elements, covering the projections of the envelope surfaces of the at least two electrode elements on that plane, so as to homogenize the current distribution in the vicinity of the active parts of the electrode elements, as seen from that side of said smoothing screen that is opposite to the at least two electrode elements.

17. Sea electrode according to any of claims 14-16, **characterized** in that said side barriers protrude from the surface of the active part of the electrode element in directions which are substantially perpendicular to the active part.

18. Sea electrode according to any of claims 14-17, **characterized** in that at least one of said side barriers has the shape of a plate, protruding from the active part of the electrode element.

19. Sea electrode (15) for grounding of a high voltage direct current transmission system, **characterized** in that it comprises an electrode element according to any of claims 4, 8, 9 when claim 9 depends on claim 4, 12, and 13 when claim 13 depends on claim 12, and in that the active part of the electrode element forms a closed ring shape configuration wherein the first and second borders form closed curves.

20. Sea electrode (15) for grounding of a high voltage direct current transmission system, **characterized** in that it comprises a plurality of electrode elements according to any of claims 5-7, 9 when claim 9 depends on any of claims 5-8, 10, 14-16, 17 when claim 17 depends on any of claims 14-15, which plurality of electrode elements is arranged along a contour line forming a closed curve.

## Patentansprüche

1. Seewasserelektrode zum Erden eines Hochspannungs-Gleichstrom-Übertragungssystemes, das mindestens ein elektrisch leitendes Elektrodenelement (161, 162, 163) umfaßt, das in ein elektrisch leitendes Medium, wie Seewasser und/oder eine seewasserimprägnierte Masse auf dem Meeresboden, eingebettet ist, um an das Übertragungssystem über ein Versorgerkabel (2) angeschlossen zu werden um einen Versorgerstrom im Versorgerkabel zwischen dem Medium und dem Übertragungssystem zu übertragen, wobei das Elektrodenelement mindestens eine erste Grenze (1611) aufweist, die einen Wirkungsbereich der Elektrodenelement-Oberfläche begrenzt, wobei der Wirkungsbereich in elektrischer Verbindung mit dem Medium steht, wenn das Elektrodenelement im Medium eingebettet ist, **dadurch gekennzeichnet,** daß das Elektrodenelement mit mindestens einem ersten Glättungsfilter (19, 19b, 19c, 19c', 19m) mit einer nichtleitenden Oberfläche versehen ist, wobei eine Projektion dieses ersten Filters auf die Oberfläche des Wirkungsbereiches des Elektrodenelementes in einer lotrecht zur Oberfläche dieses Wirkungsbereiches verlaufenden Richtung mindestens eine erste Zone (Z1) der Oberfläche des Wirkungsbereiches deckt, welche Zone nahe der ersten Grenze liegt, und mit einer ersten elektrisch nichtleitenden Steuervorrichtung (18aa, 18ab, 18e, 29aa, 29ab, 29ac) an der zumindestens einen ersten Grenze um den aus der Nähe dieser Grenze kommenden Strom gegen den Bereich des leitenden Mediums abzuleiten, der zwischen dieser ersten Zone und diesem ersten Glättungsfilter liegt, um die Stromverteilung in der Nähe des Wirkungsbereiches zu homogenisieren, von der Seite des ersten Glättungsfilters gesehen, die der Oberfläche des Wirkungs - bereiches des Elektrodenelementes gegenüber liegt.

2. Seewasserelektrode gemäß Patentanspruch 1, in der das Elektrodenelement eine erste Grenze (1611) und eine zweite Grenze (1612) aufweist, zwischen denen ein Wirkungsbereich der Oberfläche des Elektrodenelementes gebildet wird, **dadurch gekennzeichnet,** daß das Elektrodenelement mit einem ersten Glättungsfilter (19a, 19l) mit einer elektrisch nichtleitenden Oberfläche versehen ist, wobei eine Projektion dieses zweiten Filters auf die Oberfläche des Wirkungsbereiches des Elektrodenelementes in einer lotrecht zur Oberfläche dieses Wirkungsbereiches verlaufenden Richtung mindestens eine zweite Zone (Z2) der Oberfläche des Wirkungsbereiches deckt, welche zweite Zone nahe der zweiten Grenze liegt, und mit einer zweiten elektrisch nichtleitenden Steuervorrichtung (18ca, 18cb, 18f, 29ca, 29cb, 29cc) an der zweiten Grenze, um den aus der Nähe der zweiten Grenze kommenden Strom gegen den Bereich des leitenden Mediums abzuleiten, der zwischen dieser zweiten Zone und diesem zweiten Glättungsfilter liegt, um in einer Richtung zwischen der ersten und der zweiten Grenze die Stromverteilung in der Nähe des Wirkungsbereiches des Elektrodenelementes zu homogenisieren, von den Seiten dieser Filter gesehen, die der Oberfläche des Wirkungsbereiches des Elektrodenelementes gegenüber liegen.

3. Seewasserelektrode gemäß Patentanspruch 1, **dadurch gekennzeichnet,** daß diese Projektion des Glättungsfilters den gesamten Wirkungsbereich des Elektrodenelementes deckt.

4. Seewasserelektrode gemäß irgendeinem der Patentansprüche 1 bis 3, **dadurch gekennzeichnet,** daß das Elektrodenelement eine im wesentlichen platte Gestalt hat und daß das mindestens eine Glättungsfilter eine im wesentlichen platte Gestalt hat.

5. Seewasserelektrode gemäß irgendeinem der Patentansprüche 1 bis 3, **dadurch gekennzeichnet,** daß mindestens ein Elektrodenelement eine zylindrische Gestalt hat und daß das mindestens eine Glättungsfilter (19l, 19m) eine rohrförmige Gestalt hat, die das mindestens eine Elektrodenelement im wesentlichen konzentrisch mit dem mindestens einem Elektrodenelement umschließt.

6. Seewasserelektrode gemäß Patentanspruch 5, mit mindestens zwei Elektrodenelementen mit zylindricher Gestalt, **dadurch gekennzeichnet,** daß jedes Elektrodenelement mit einem Glättungsfilter mit rohrförmiger Gestalt versehen ist und das Elektrodenelement im wesentlichen konzentrisch mit dem Elektrodenelement umschließt.

7. Seewasserelektrode gemäß Patentanspruch 5, mit mindestens zwei Elektrodenelementen mit zylindricher Gestalt, **dadurch gekennzeichnet,** daß jedes Elektrodenelement mit einem Glättungsfilter mit rohrförmiger Gestalt versehen ist und die mindestens zwei Elektrodenelemente umschließt.

8. Seewasserelektrode zum Erden eines Hochspannungs-Gleichstrom-Übertragungs -systemes, das mindestens ein elektrisch leitendes Elektrodenelement (161, 162, 163) umfaßt, das in ein elektrisch leitendes Medium, wie Seewasser und/oder eine seewasserimprägnierte Masse auf dem Meeresboden, eingebettet ist, um an das Übertragungssystem über ein Versorgerkabel (2) angeschlossen zu werden um einen Versorgerstrom im Versorgerkabel zwischen dem Medium und dem Übertragungssystem zu übertragen, wobei das Elektrodenelement eine im wesentlichen platte Gestalt hat, und wobei der Wirkungsbereich der Oberfläche des Elektrodenelementes in elektrischer Verbindung mit dem Medium ist, wenn das Elektrodenelement darin eingebettet ist, und wobei das Elektrodenelement mindestens einen Versorgungs - bereich (21c, 21c') aufweist, der an der Oberfläche des Wirkungsbereiches des Elektrodenelementes liegt, für einen Anschluß an das Versorgerkabel, **dadurch gekennzeichnet**, daß das Elektrodenelement mit einem Glättungsfilter (19c, 19c') mit einer elektrisch nichtleitenden Oberfläche versehen ist, das in gewähltem Abstand (HS) von der Oberfläche des Wirkungsbereiches des Elektrodenelementes liegt, und mit einer Projektion dieses Filters auf die Oberfläche des Wirkungsbereiches des Elektrodenelementes in einer lotrecht zur Oberfläche dieses Wirkungsbereiches verlaufenden Richtung, die den Versorgungsbereich und ein gewähltes Gebiet des Wirkungsbereiches des Elektrodenelementes in der Nähe des Versorgungsbereiches deckt, um die Stromverteilung in der Nähe des Wirkungsbereiches zu homogenisieren, von der Seite dieses Glättungsfilters gesehen, die der Oberfläche des Wirkungsbereiches des Elektrodenelementes gegenüber liegt.

9. Seewasserelektrode gemäß irgendeinem der vorhergehenden Patent - ansprüche, **dadurch gekennzeichnet,** daß der Wirkungsbereich des Elektrodenelementes in eine Nachfüllanordnung (23, 23a, 23b) eingebettet ist, die elektrisch leitenden Werkstoff, beispielsweise kohlenstoffhaltigen Werkstoff, enthält.

10. Seewasserelektrode gemäß Patentanspruch 5, **dadurch gekennzeichnet,** daß der Wirkungsbereich des Elektrodenelementes in eine Nachfüllanordnung (23) eingebettet ist, die elektrisch leitenden Werkstoff, beispielsweise kohlenstoffhaltigen Werkstoff, der zwischen der Oberfläche des Wirkungsbereiches des Elektroden - elementes und diesem Filter liegt, enthält.

11. Seewasserelektrode gemäß einem der Patentansprüche 4, 8 und 9, wobei Patentanspruch 9 von Patentanspruch 4 abhängt, in der das Elektrodenelement mindestens eine erste Grenze (1611) aufweist, die einen Wirkungsbereich der Oberfläche des Elektrodenelementes begrenzt, **dadurch gekennzeichnet,** daß das Elektrodenelement mit mindestens einem länglichen Stromversorger (17a, 17b) zum Anschluß an das Versorgerkabel versehen ist, sowie mit elektrisch nichtleitenden Teilen (18a', 18b') um den Stromversorger elektrisch vom Medium zu isolieren, wenn das Elektrodenelement darin eingebettet ist, wobei der Stromversorger seiner Länge entlang an die mindestens erste Grenze angeschlossen ist, um dadurch um die Stromverteilung im Wirkungsbereich zu homogenisieren.

12. Seewasserelektrode gemäß Patentanspruch 11, in der das Elektroden - element die Gestalt eines länglichen Streifens hat, mit einer ersten Grenze (1611) und einer zweiten Grenze (1612) in der Streifenlängsrichtung, und in der der Wirkungsbereich der Oberfläche des Elektrodenelementes gebildet wird, **dadurch gekennzeichnet,** daß der mindestens eine längliche Stromversorger seiner Länge entlang an mindestens eine der ersten und zweiten Grenzen angeschlossen ist.

13. Seewasserelektrode gemäß Patentanspruch 11 oder 12, **dadurch gekennzeichnet,** daß das Elektrodenelement einen isolierten Teil in der Nähe der zumindestens ersten Grenze umfaßt, wobei der Teil mit elektrisch nichtleitenden Teilen (18a', 18b') versehen ist, um es elektrisch vom Medium zu isolieren, wenn das Elektrodenelement im Medium eingebettet ist, und daß dieser Stromversorger an die mindestens erste Grenze angeschlossen ist, sodaß dieser isolierte Teil des Elektrodenelementes zwischen den Stromversorger und der mindestens ersten Grenze zu liegen kommt.

14. Seewasserelektrode gemäß irgendeindem der Patentansprüche 1 bis 13, in der das Elektrodenelement eine erste Grenze (1611) und eine zweite Grenze (1612) hat, zwischen denen ein Wirkungsbereich der Oberfläche des Elektrodenelementes gebildet wird, **dadurch gekennzeichnet**, daß das Elektrodenelement mit zwei elektrisch nichtleitenden Seitensperren (18a bis 18f) versehen ist, die jeweils an der ersten und der zweiten Grenze liegen, wobei die Seitensperren eine wesentliche Streckung (HB) vom Wirkungsbereich des Elektrodenelementes nach außen haben, sodaß sie eine wesentliche Ausdehnung im Medium bekommen, wenn das Elektrodenelement darin eingebettet ist, um dadurch die Stromverteilung am Wirkungsbereich entlang der Richtung zwischen der ersten und der zweiten Grenze zu homogenisieren.

15. Seewasserelektrode gemäß Patentanspruch 14, in der mindestens zwei Elektrodenelemente zylindrische Gestalt haben, **dadurch gekennzeichnet**, daß die mindestens zwei Elektrodenelemente mit einer elektrisch nichtleitenden Seitensperre (18e) an ihren entsprechenden ersten Grenzen versehen sind, wobei die Seitensperre für die mindestens zwei Elektrodenelemente gemeinsam ist, um dadurch die Stromverteilung am Wirkungsbereich entlang der Richtung zwischen der ersten und der zweiten Grenze für die beiden Elektrodenelemente mit diesen gemeinsamen Seitensperren zu homogenisieren.

16. Seewasserelektrode gemäß Patentanspruch 15, **dadurch gekennzeichnet,** daß sie mit einem Glättungsfilter (19) mit einer elektrisch nichtleitenden Oberfläche versehen ist, die zwischen diesen Seitensperren liegt, wobei eine Projektion dieses Glättungsfilters in einer Richtung, die lotrecht zur Ebene durch die Längsachse der mindestens zwei Elektrodenelemente verläuft, die Projektionen der umschliessen - den Oberflächen der mindestens zwei Elektrodenelemente in dieser Ebene deckt, um die Stromverteilung in der Nähe der Wirkungsbereiche der Elektrodenelemente zu homogenisieren, gesehen von der Seite des Glättungsfilters, die den mindestens zwei Elektrodenelementen gegenüberliegt.

17. Seewasserelektrode gemäß irgendeinem der Patentansprüche 14 bis 16, **dadurch gekennzeichnet,** daß diese Seitensperren aus der Oberfläche des Wirkungsbereiches des Elektrodenelementes in Richtungen hervorragen, die im wesentlichen lotrecht zum Wirkungsbereich liegen.

18. Seewasserelektrode gemäß irgendeinem der Patentansprüche 14 bis 17, **dadurch gekennzeichnet,** daß mindestens eine dieser Seitensperren die Gestalt eines aus dem Wirkungsbereich des Elektrodenelementes hervorrragenden Bleches hat.

19. Seewasserelektrode (15) zum Erden eines Hochspannungs-Gleichstrom-Übertragungssystemes, **dadurch gekennzeichnet,** daß sie ein Elektrodenelement gemäß irgendeinem der Patentansprüche 4, 8, 9 umfaßt, wobei Patentanspruch 9 von den Patentansprücheen 4, 12 und 13 abhängt, wenn Patentanspruch 13 von Patentanspruch 123 abhängt, und daß der Wirkungsbereich des Elektroden - elementes eine einen geschlossenen Ring bildende Anordnung formt, worin die erste und die zweite Grenze geschlossene Kurven bilden.

20. Seewasserelektrode (15) zum Erden eines Hochspannungs-Gleichstrom-Übertragungssystemes, **dadurch gekennzeichnet,** daß sie eine Reihe mit Elektrodenelementen gemäß irgendeinem der Patentansprüche 5 bis 7 umfaßt, wobei Patentanspruch 9 von irgendeinem der Patentansprüche 5 bis 8, 14 bis 16, und 17 abhängt, wenn Patentanspruch 17 von irgendeinem der Patentansprüche 14 bis 15 und 21 abhängt, wobei die Reihe der Elektrodenelemente entlang einer eine geschlossene Kurve bindenden Konturlinie angeordnet ist.

## Revendications

1. Electrode (15) pour eau de mer pour mettre à la terre un système de transmission de courant continu sous haute tension, comprenant au moins un élément (161, 162, 163) conducteur de l'électricité formant électrode, destiné à être noyé dans un milieu conducteur tel que de l'eau de mer et/ou une matière imprégnée d'eau de mer au fond de la mer, pour être couplé au système de transmission par l'intermédiaire d'un câble (2) d'alimentation, pour transférer entre le milieu et le système de transmission, un courant passant dans le câble d'alimentation, l'élément formant électrode ayant au moins un premier bord (1611), qui délimite une partie active de la surface de l'élément formant électrode, cette partie active étant en contact électrique avec le milieu quand l'élément formant électrode est noyé dans le milieu, caractérisée en ce que l'élément formant électrode est muni d'au moins un premier écran (19, 19b, 19c, 19c', 19m) d'égalisation, ayant une surface non conductrice de l'électricité, une projection du premier écran sur la surface de la partie active de l'élément formant électrode, suivant une direction perpendiculaire à la surface de cette partie active, recouvrant au moins une première zone (Z1) de la surface de la partie active, cette zone étant adjacente au premier bord, et de premiers moyens (18aa, 18ab, 18e, 29aa, 29ab, 29ac) de guidage non conducteurs de l'électricité, audit au moins un premier bord, pour dévier du courant provenant du voisinage de ce bord vers la partie du milieu conducteur qui est située entre la première zone et le premier écran d'égalisation, de manière à homogénéiser la répartition du courant au voisinage de la partie active, telle que vue du côté du premier écran d'égalisation qui est opposé à la surface de la partie active de l'élément formant électrode.

2. Electrode pour eau de mer suivant la revendication 1, dans laquelle l'élément formant électrode a un premier bord (1611) et un deuxième bord (1612) entre lesquels est formée une partie active de la surface de l'élément formant électrode, caractérisée en ce que l'élément formant électrode est muni d'un second écran (19a, 19l) d'égalisation ayant une surface non conductrice de l'électricité, une projection du second écran sur la surface de la partie active de l'élément formant électrode, suivant une direction perpendiculaire à la surface de cette partie active, recouvrant une seconde zone (Z2) de la surface de cette partie active, cette seconde zone étant adjacente au second bord, et des seconds moyens (18ca, 18cb, 18f, 29ca, 29cb, 29cc) de guidage non conducteurs de l'électricité au deuxième bord pour dévier du courant provenant du voisinage du deuxième bord vers la partie du milieu conducteur qui est située entre la seconde zone et le second écran d'égalisation, de manière à homogénéiser, le long d'une direction entre le premier bord et le deuxième bord, la répartition du courant au voisinage de la partie active de l'élément formant électrode, telle que vue à partir des bords des écrans qui sont opposés à la surface de la partie active de l'élément formant électrode.

3. Electrode pour eau de mer suivant la revendication 1, caractérisée en ce que la projection de l'écran (19) d'égalisation recouvre toute la partie active de l'élément formant électrode.

4. Electrode pour eau de mer suivant l'une quelconque des revendication 1 à 3, caractérisée en ce que l'élément formant électrode a une forme sensiblement plate et ledit au moins un écran d'égalisation a une forme sensiblement plate.

5. Electrode pour eau de mer suivant l'une quelconque des revendications 1 à 3, caractérisée en ce que ledit au moins un élément formant électrode a une forme cylindrique et ledit au moins un écran (19l, 19m) d'égalisation a une forme tubulaire, enfermant ledit au moins un élément formant électrode en étant sensiblement coaxial audit au moins un élément formant électrode.

6. Electrode pour eau de mer suivant la revendication 5, ayant au moins deux éléments formant électrode de forme cylindrique, caractérisée en ce que chaque élément formant électrode est muni d'un écran d'égalisation ayant une forme tubulaire et enfermant l'élément formant électrode en étant sensiblement coaxial à l'élément formant électrode.

7. Electrode pour eau de mer suivant la revendication 5, ayant au moins deux éléments formant électrode de forme cylindrique, caractérisée en ce chaque élément formant électrode est muni d'un écran d'égalisation ayant une forme tubulaire, et qui enferme lesdits au moins deux éléments formant électrode.

8. Electrode (15) pour de l'eau de mer pour la mise à la terre d'un système de transmission à courant continu sous haute tension, comprenant au moins un élément (161, 162, 163) conducteur de l'électricité formant électrode à noyer dans un milieu conducteur tel que de l'eau de mer et/ou de la matière imprégnée d'eau de mer au fond de la mer, et à coupler au système de transmission par l'intermédiaire d'un câble (2) d'alimentation, pour transférer entre le milieu et le système de transmission un courant passant dans le câble d'alimentation, l'élément formant électrode ayant une forme sensiblement plate et dans laquelle une partie active de la surface d'élément formant électrode est en contact électrique avec le milieu lorsque l'élément formant électrode y est noyé, l'élément formant électrode ayant au moins une zone (21c, 21c') d'alimentation, située à la surface de la partie active de l'élément formant électrode, pour coupler le câble d'alimentation, caractérisée en ce que l'élément formant électrode est muni d'un écran (19c, 19c') d'égalisation ayant une surface non conductrice de l'électricité située à une distance (HS) sélectionnée de la surface de la partie active de l'élément formant électrode, une projection de l'écran sur la surface de cette partie active, suivant une direction perpendiculaire à la surface de cette partie active, recouvrant la zone d'alimentation et une partie sélectionnée de la partie active de l'élément formant électrode au voisinage de la zone d'alimentation, de manière à homogénéiser la répartition du courant au voisinage de la zone d'alimentation telle que vue du côté de l'écran d'égalisation qui est opposé à la surface de la partie active de l'élément formant électrode.

9. Electrode pour eau de mer suivant l'une quelconque des revendications précédentes, caractérisée en ce que la partie active de l'élément formant électrode est noyée dans un garnissage (23, 23a, 23b) arrière comprenant de la matière conductrice des électrons, telle qu'une matière carbonacée.

10. Electrode pour eau de mer suivant la revendication 5, caractérisée en ce que la partie active de l'élément formant électrode est noyée dans un garnissage (23) arrière comprenant une matière conductrice des électrons, telle qu'une matière carbonacée, disposée entre la surface de la partie active de l'élément formant électrode et l'écran d'égalisation.

11. Electrode pour eau de mer suivant l'une quelconque des revendication 4, 8 et 9, lorsque la revendication 9 dépend de la revendication 4, l'élément formant électrode ayant au moins un premier bord (1611) qui délimite une partie active de la surface de l'élément formant électrode, caractérisée en ce que l'élément formant électrode est muni d'eau d'au moins une alimentation (17a, 17b) oblongue en courant destinée à coupler le câble d'alimentation, et de moyens (18a', 18b') non conducteurs de l'électricité pour isoler électriquement l'alimentation en courant du milieu lorsque l'élément formant électrode y est noyé, l'alimentation en courant étant, sur sa longueur, couplée audit au moins un premier bord, de manière à homogénéiser la répartition du courant dans la partie active.

12. Electrode pour eau de mer suivant la revendication 11, dans laquelle l'élément formant électrode a la forme d'une bande oblongue ayant un premier bord (1611) et un deuxième bord (1612) dans la direction longitudinale de la bande, et entre lesquels bords la partie active de la surface de l'élément formant électrode est formée, caractérisée en ce que ladite au moins une alimentation oblongue de courant est le long de sa longueur couplée à au moins l'un des premier et deuxième bords.

13. Electrode pour eau de mer suivant la revendication 11 ou la revendication 12, caractérisée en ce que l'élément formant électrode comprend une partie isolée adjacente audit au moins un premier bord, cette partie étant munie de moyens (18a', 18b') non conducteurs de l'électricité, pour l'isoler électriquement du milieu quand l'élément formant l'électrode est noyé dans le milieu, et en ce que l'alimentation en courant est couplée audit au moins un premier bord de manière que la partie isolée de l'élément formant électrode soit disposée entre l'alimentation en courant et ledit au moins un premier bord.

14. Electrode pour eau de mer suivant l'une quelconque des revendication 1 à 13, l'élément formant électrode ayant un premier bord (1611) et un deuxième bord (1612), entre lesquels est formée une partie active de la surface de l'élément formant électrode, caractérisée en ce que l'élément formant électrode est muni de deux barrières (18a à 18f) latérales non conductrices de d'électricité disposées une à chacun des premier et deuxième bords, les barrières latérales ayant une étendue (HB) importante à l'extérieur de la partie active de l'élément formant électrode de manière à avoir une étendue importante dans le milieu lorsque l'élément formant électrode y est noyé, de sorte à homogénéiser la répartition du courant à la partie active le long d'une direction entre les premier et deuxième bords.

15. Electrode pour eau de mer suivant la revendication 14, ayant au moins deux éléments formant électrode de forme cylindrique, caractérisée en ce que lesdits au moins deux éléments formant électrode sont munis d'une barrière (18e) latérale non conductrice de l'électricité, à leur premier bord respectif, cette barrière latérale étant commune auxdits au moins deux éléments formant électrode, et d'une barrière (18f) latérale non conductrice de l'électricité à leur deuxième bord respectif, cette barrière latérale étant commune auxdits au moins deux éléments formant électrode de manière à homogénéiser la répartition du courant à la partie active le long d'une direction entre les premier et deuxième bords pour chacun des éléments formant électrode, ayant des barrières latérales communes.

16. Electrode pour eau de mer suivant la revendication 15, caractérisée en ce qu'elle est munie d'un écran (19) d'égalisation ayant une surface non conductrice d'électricité située entre les barrières latérales, une projection de l'écran d'égalisation, suivant une direction perpendiculaire à un plan passant par les axes longitudinaux desdits au moins deux éléments formant électrode, recouvrant les projections des surfaces enveloppes desdits aux moins deux éléments formant électrode sur ce plan, de manière à homogénéiser la répartition du courant au voisinage des parties actives des éléments formant électrode, telles que vues à partir du côté de l'écran d'égalisation qui est opposé auxdits au moins deux éléments formant électrode.

17. Electrode pour eau de mer suivant l'une quelconque des revendications 14 à 16, caractérisée en ce que les barrières latérales font saillie de la surface de la partie active de l'élément formant électrode dans des directions qui sont sensiblement perpendiculaires à la partie active.

18. Electrode pour eau de mer suivant l'une quelconque des revendications 14 à 17, caractérisée en ce qu'au moins l'une des barrières latérales a la forme d'une plaque, faisant saillie de la partie active de l'élément formant électrode.

19. Electrode (15) pour eau de mer pour mettre à la terre un système de transmission de courant continu sous haute tension, caractérisée en ce qu'elle comprend un élément formant électrode suivant l'une quelconque des revendications 4, 8, 9 quand la revendication 9 dépend de la revendication 4, 12 et 13 quand la revendication 13 dépend de la revendication 12, et en ce que la partie active de l'élément formant électrode forme une configuration fermée de forme annulaire, dans laquelle les premier et second bords forment des courbes fermées.

20. Electrode (15) pour eau de mer pour la mise à la terre d'un système de transmission en courant continu sous haute tension, caractérisée en ce qu'elle comprend une pluralité d'éléments formant électrode suivant l'une quelconque des revendications 5 à 7, 9 quand la revendication 9 dépend de l'une quelconque des revendications 5 à 8, 10, 14 à 16, 17 quand la revendication 17 dépend de l'une quelconque des revendications 14 à 15 et 21, la pluralité d'éléments formant électrode étant disposée le long d'une ligne de contour formant une courbe fermée.
